(19) **Europäisches Patentamt**
**European Patent Office**
**Office européen des brevets**

(11) **EP 2 293 712 B1**

(12) **FASCICULE DE BREVET EUROPEEN**

(45) Date de publication et mention
de la délivrance du brevet:
**10.04.2013 Bulletin 2013/15**

(21) Numéro de dépôt: **09761929.0**

(22) Date de dépôt: **11.06.2009**

(51) Int Cl.:
*A61B 3/024* (2006.01)    *G02C 13/00* (2006.01)
*A61B 3/113* (2006.01)    *G02C 7/02* (2006.01)
*G02C 7/06* (2006.01)

(86) Numéro de dépôt international:
**PCT/FR2009/051096**

(87) Numéro de publication internationale:
**WO 2009/150378 (17.12.2009 Gazette 2009/51)**

(54) **REALISATION D'UN VERRE OPHTALMIQUE PROGRESSIF PERSONNALISE**

HERSTELLUNG VON SPEZIELL ANGEPASSTEN PROGRESSIVEN OPHTHALMISCHEN LINSEN

PRODUCTION OF CUSTOMISED PROGRESSIVE OPHTHALMIC LENS

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **12.06.2008 FR 0853890**

(43) Date de publication de la demande:
**16.03.2011 Bulletin 2011/11**

(73) Titulaire: **Essilor International
(Compagnie Générale d'Optique)
94220 Charenton-le-Pont (FR)**

(72) Inventeur: **GIRAUDET, Guillaume
F-94220 Charenton-le-Pont (FR)**

(74) Mandataire: **Cabinet Plasseraud
52, rue de la Victoire
75440 Paris Cedex 09 (FR)**

(56) Documents cités:
**EP-A- 0 940 117          WO-A-01/62139
WO-A-2007/088313     US-A- 4 537 479
US-A1- 2003 143 391   US-B1- 6 886 938**

• **STEFANIE SCHULDT: "ysis - Natürliches sehen
erleben" DEUTSCHE OPTIKER ZEITUNG, XX, DE,
no. 5/2004, 1 mai 2004 (2004-05-01), pages 38-43,
XP002398937**

**Description**

La présente invention concerne la réalisation d'un verre ophtalmique progressif personnalisé, c'est-à-dire d'un verre de lunettes progressif qui est destiné à un porteur identifié.

Les verres progressifs («Progressive Power Lens» en anglais) sont utilisés depuis longtemps pour corriger une amétropie d'un porteur d'une façon qui est adaptée à la fois pour la vision de loin et pour la vision de près. Pour cela, le verre présente des valeurs de puissance optique qui sont variables le long d'une ligne méridienne, entre une direction de référence pour la vision de loin et une direction de référence pour la vision de près. Les valeurs de la puissance optique pour ces deux directions de référence sont déterminées à partir d'une prescription qui est établie pour le porteur. De façon usuelle, la prescription indique une valeur de la puissance optique pour la vision de loin et une valeur d'addition. La valeur de la puissance optique du verre qui convient au porteur pour corriger sa vue en condition de vision de près est égale à la somme de la valeur de puissance optique qui est prescrite pour la vision de loin et de la valeur d'addition prescrite. Le verre qui est fourni au porteur est réalisé pour produire sensiblement la valeur de la puissance optique qui est ainsi calculée pour la vision de près et la valeur de la puissance optique qui est prescrite pour la vision de loin, respectivement pour les deux directions de référence pour la vision de près et pour la vision de loin.

Il est connu qu'un verre progressif présente, d'une façon qui est inhérente à son principe, un astigmatisme involontaire qui peut être réparti dans des zones latérales du verre, de façon à gêner le moins possible la vision du porteur. Cette répartition de l'astigmatisme involontaire peut être effectuée en privilégiant un canal large dépourvu d'astigmatisme, entre les directions de référence pour les visions de loin et de près. Mais l'astigmatisme involontaire est alors supérieur à proximité des bords latéraux du verre. Alternativement, un canal dépourvu d'astigmatisme qui est étroit permet de réduire les valeurs d'astigmatisme involontaire dans les zones latérales du verre.

Il a alors été proposé d'adapter la répartition de l'astigmatisme involontaire en fonction de la propension du porteur à tourner horizontalement plutôt la tête ou les yeux lorsqu'il regarde successivement dans deux directions distinctes, situées à une même hauteur. Une telle adaptation du design du verre progressif permet de réduire la gêne qui est causée par l'astigmatisme involontaire au porteur. Il s'agit donc d'une personnalisation du verre progressif en fonction du porteur, qui est supplémentaire par rapport à la concordance du verre avec la prescription optique qui est établie pour le porteur.

Il est aussi connu d'adapter un verre progressif en fonction des mouvements verticaux de la tête du porteur. Il s'agit d'une autre personnalisation encore du verre progressif, qui est différente de la précédente basée sur les mouvements de tête horizontaux. Une telle personnalisation, qui prend en compte les changements d'inclinaison de la tête dans un plan vertical, a pour but d'ajuster la variation de la puissance optique du verre progressif le long de la ligne méridienne. De cette façon, la puissance optique est adaptée à l'éloignement d'un objet regardé quelque soit la hauteur angulaire de la direction dans laquelle se trouve l'objet devant le porteur. Dans ce but, les documents EP 1 591 064 et WO 2007 088 313 par exemple, proposent chacun un dispositif qui permet de déterminer les variations d'inclinaison de la tête du porteur lorsqu'il regarde alternativement dans la direction de référence pour la vision de loin et celle pour la vision de près.

Mais, les méthodes de personnalisation d'un verre progressif qui ont été proposées avant la présente invention, pour prendre en compte les mouvements de la tête du porteur dans un plan vertical, sont limitées à des conditions de vision de près. Des conditions de vision intermédiaires entre les visions de près et de loin sont parfois prises en compte. Dans le cadre de la présente description, des conditions de vision de près correspondent à un objet regardé qui est situé à moins de 40 cm (centimètre) des yeux du porteur, et des conditions de vision de loin correspondent à une distance d'observation qui est supérieure à 120 cm. La personnalisation du verre progressif qui est réalisée selon certaines de ces méthodes antérieures consiste à ajuster la hauteur du point de référence pour la vision de près à l'intérieur du verre. De cette façon, une éventuelle durée d'accoutumance du porteur au verre progressif peut être réduite.

En outre, dans ces méthodes de personnalisation antérieures, le porteur est toujours statique dans les situations d'observation qui sont reproduites pour déterminer sa propension à bouger plutôt la tête ou les yeux. Autrement dit, ces méthodes antérieures de personnalisation d'un verre progressif ne prennent en compte aucun déplacement du porteur par rapport à l'objet regardé.

Or il est apparu qu'un porteur de verres progressifs personnalisés pour la vision de près pouvait être encore gêné dans des circonstances qui correspondent à la vision de loin. La correction visuelle variable qui est procurée par le verre progressif peut en effet être inadaptée par rapport aux mouvements de tête verticaux, lorsque le porteur regarde des objets qui sont éloignés dans la direction de référence pour la vision de loin puis dans des directions variables en dessous de cette direction de référence. Il peut alors en résulter une gêne du porteur pendant une durée d'accoutumance à un nouveau verre progressif.

En outre, il a été constaté que les mouvements de tête verticaux qui sont réalisés par le porteur pour regarder des objets éloignés, sont différents lorsque le porteur est immobile ou lorsqu'il se déplace. Cette différence est due à une anticipation spontanée du porteur par rapport à son déplacement réel. Un tel comportement intervient, par exemple, lorsque le porteur marche dans la rue en observant alternativement devant lui le sol et un paysage éloigné.

Un but de la présente invention consiste donc à améliorer la personnalisation d'un nouveau verre ophtalmique progressif qui est fourni à un porteur, notamment pour l'observation d'objets éloignés, ainsi que

à améliorer la perception visuelle, par le porteur, d'objets qui sont situés devant lui vers le bas, en particulier d'objets qui sont situés devant lui au niveau du sol.

Un autre but encore de l'invention consiste à adapter le verre progressif au comportement dynamique du porteur, c'est-à-dire lorsqu'il se déplace par rapport aux objets qu'il est en train de regarder.

Pour cela, l'invention propose un nouveau procédé de réalisation d'un verre ophtalmique progressif personnalisé, selon la revendication 1 qui est destiné à un porteur identifié. Ce procédé comprend les étapes suivantes :

/a/ pour le porteur, obtenir une valeur de puissance optique prescrite pour la vision de loin et une valeur d'addition prescrite, une somme de la valeur de puissance optique qui est prescrite pour la vision de loin avec la valeur d'addition prescrite fournissant une valeur prescrite de puissance optique pour la vision de près ; et

/g/ réaliser le verre de façon à obtenir pour les directions suivantes à travers le verre :

- pour la direction de référence pour la vision de loin : une première valeur de la puissance optique qui correspond à la valeur prescrite pour la vision de loin, et

- pour la direction de référence pour la vision de près : une deuxième valeur de la puissance optique qui correspond à la valeur prescrite pour la vision de près.

Le procédé de l'invention est caractérisé en ce qu'il comprend en outre les étapes suivantes, qui sont effectuées entre les étapes /a/ et /g/ :

/b/ présenter des premiers signaux visuels à hauteur d'yeux du porteur en position debout, les premiers signaux visuels étant adaptés pour provoquer une première tâche visuelle ;

/c/ pour le porteur, marcher en direction des premiers signaux visuels à partir d'une distance initiale qui est mesurée horizontalement par rapport à ces premiers signaux, en effectuant la première tâche visuelle ;

/d/ lorsque le porteur arrive à une première distance des premiers signaux visuels, inférieure à la distance initiale, présenter des seconds signaux visuels sur le sol entre le porteur et les premiers signaux, à une seconde distance mesurée horizontalement à partir des premiers signaux et inférieure à la première distance, les seconds signaux visuels étant adaptés pour provoquer une deuxième tâche visuelle, le porteur passant alors de la première tâche à la deuxième tâche ;

/e/ mesurer des premiers angles d'inclinaison de la tête du porteur dans un plan vertical pendant que le porteur effectue la première tâche puis la deuxième tâche ; **et**

/f/ à partir des premiers angles d'inclinaison de la tête du porteur qui sont mesurés selon l'étape /e/ et pour un premier écart fixé de la puissance optique par rapport à la valeur de la puissance optique prescrite pour la vision de loin, le premier écart étant inférieur à la moitié de la valeur d'addition prescrite, déterminer une première direction intermédiaire de regard à travers le verre qui coupe la ligne méridienne entre la direction de référence pour la vision de loin et la direction de référence pour la vision de près, cette première direction intermédiaire étant associée à la valeur de la puissance optique prescrite pour la vision de loin ajoutée au premier écart de puissance optique.

Le verre est alors réalisé à l'étape /g/ de façon à obtenir en outre, pour la première direction intermédiaire qui est déterminée à l'étape /f/, une troisième valeur de la puissance optique qui correspond à la valeur prescrite pour la vision de loin ajoutée au premier écart de puissance optique.

Ainsi un procédé selon l'invention comprend des mesures d'inclinaison de la tête du porteur, pendant qu'il effectue successivement deux tâches visuelles dans des conditions différentes. Le verre est ensuite réalisé en prenant en compte les résultats de ces mesures. De cette façon, le procédé procure une personnalisation du verre qui est supplémentaire par rapport aux caractéristiques optiques qui sont prescrites.

Cette personnalisation supplémentaire est basée sur les mouvements qu'effectue le porteur avec sa tête dans un plan vertical. En effet, les premiers signaux visuels sont présentés en face du porteur, à la hauteur de ses yeux, alors que les seconds signaux visuels sont présentés sur le sol devant lui. La direction de son regard, de même que l'orientation de son visage, varie donc dans le plan vertical qui passe par la tête du porteur et les premiers signaux.

Dans le cadre de la présente invention, on entend par tâche visuelle une lecture volontaire des signaux visuels qui nécessite l'attention du porteur. Une telle tâche amène le porteur à adopter spontanément une posture, en particulier pour sa tête, qui correspond à son comportement usuel pour les différentes positions des signaux. De préférence, les signaux visuels qui sont présentés sont suffisamment grands et simples pour que la tâche visuelle correspondante puisse être exécutée par le porteur même s'il n'est pas équipé de verres correcteurs appropriés, ou même s'il est dépourvu de verres correcteurs.

Pendant les étapes /c/ à /e/ du procédé, le porteur est mis dans des conditions de vision de loin. En effet, la distance initiale qui est nécessaire pour que le porteur adopte une marche normale pendant ces étapes est supérieure à 2 m (mètres), de préférence supérieure à 3 m, ou mieux à 5 m. Elle correspond à la distance initiale d'observation des premiers signaux visuels. Des valeurs pour cette distance initiale entre le porteur et les premiers signaux qui sont supérieures à 3 m procurent un confort qui est accru pour la mise en situation du porteur. Les résultats des mesures d'inclinaison de la tête du porteur qui sont alors obtenues sont plus représentatifs de son comportement et de ses postures usuelles. Les seconds signaux visuels sont présentés sur le sol devant le porteur, ce qui correspond à une distance d'observation qui est comprise entre 1,5 et 3 m, en fonction de la taille du porteur. Cette dernière distance d'observation correspond donc encore à des conditions de vision de loin.

Enfin, le porteur se déplace pendant les étapes /c/ à /e/ du procédé, en direction des premiers et seconds signaux visuels. Un tel déplacement reproduit des conditions d'observation qui sont dites dynamiques, par opposition à une posture statique du porteur pendant une observation attentive. De telles conditions d'observation, qui sont combinées avec un déplacement du porteur en direction de l'objet qu'il regarde, interviennent très fréquemment dans la vie courante. De cette façon, le verre qui est fourni au porter est adapté à des situations aussi fréquentes que de marcher dans une rue.

Pour ces raisons, le verre progressif qui est réalisé selon l'invention procure un confort visuel et physique au porteur qui est amélioré. En particulier, il n'est pas nécessaire pour le porteur de modifier ses habitudes posturales pour regarder des objets éloignés. Ainsi, aucune durée d'adaptation du porteur au nouveau verre progressif n'est nécessaire.

En prenant ainsi en compte les mouvements de tête du porteur, dans un plan vertical et pour des conditions de vision de loin, un procédé conforme à l'invention permet d'ajuster les variations de la puissance optique du verre en dessous de la direction de référence pour la vision de loin, le long de la ligne méridienne. Dans le jargon de l'Homme du métier, le début de la progression de la puissance optique peut ainsi être ajusté, à partir du point de référence sur le verre pour la vision de loin, en direction du point de référence pour la vision de près.

Cet ajustement est réalisé en modifiant une direction de regard à travers le verre, pour laquelle la puissance optique est supérieure du premier écart qui est fixé, à la valeur qui est prescrite pour la vision de loin. Ce premier écart est inférieur à la moitié de la valeur d'addition prescrite. De cette façon, l'ajustement concerne une partie de la ligne méridienne du verre qui est proche du point de référence pour la vision de loin, entre ce point et le point de référence pour la vision de près. De préférence, le premier écart de puissance optique est compris entre 0,25 et 0,75 dioptrie, ou compris entre 10% et 40% de la valeur d'addition prescrite.

De façon préférée, la première direction intermédiaire est déterminée à l'étape /f/ de sorte que la distance angulaire entre cette direction et la direction de référence pour la vision de loin est d'autant plus grande que le porteur baisse peu la tête lorsqu'il passe de la première tâche visuelle à la seconde tâche visuelle.

Conformément à une mise en oeuvre avantageuse de l'invention, une valeur d'un premier gain peut être calculée à l'étape /f/ pour le porteur, selon une première fonction d'une variation entre deux premiers angles d'inclinaison de la tête du porteur qui sont mesurés respectivement pendant qu'il effectue successivement les première et deuxième tâches. La première direction intermédiaire est alors déterminée de sorte qu'une distance angulaire entre la direction de référence pour la vision de loin et la première direction intermédiaire varie selon une seconde fonction de la valeur du premier gain. La première ou la seconde fonction est croissante, et l'autre est décroissante.

De préférence, le premier gain est égal à une division de la variation entre deux premiers angles d'inclinaison de la tête qui sont mesurés respectivement pendant les première et seconde tâches, par un angle de l'abaissement correspondant du regard du porteur. La seconde fonction est alors décroissante, par rapport au premier gain.

Selon un perfectionnement de l'invention, le procédé peut permettre en outre d'ajuster les variations de la puissance optique du verre progressif au dessus du point de référence pour la vision de près, sur la ligne méridienne en direction du point de référence pour la vision de loin, ou bien la hauteur du point de référence pour la vision de près sur cette ligne. Pour cela, le procédé peut comprendre en outre les étapes suivantes, qui sont exécutées entre les étapes /a/ et /g/ :

/b'/ lorsque le porteur est assis à un bureau, présenter des troisièmes signaux visuels au dessus du bureau, à un premier emplacement qui correspond à une position d'écran d'affichage de données informatiques, les troisièmes signaux visuels étant adaptés pour provoquer une troisième tâche visuelle ;

/c'/ pour le porteur, se tenir assis au bureau et effectuer la troisième tâche visuelle ;

/d'/ présenter des quatrièmes signaux visuels sur le bureau devant le porteur, à un second emplacement qui correspond à une feuille de papier posée sur le bureau et lue par le porteur, les quatrièmes signaux visuels étant adaptés pour provoquer une quatrième tâche visuelle ;

/e'/ mesurer des seconds angles d'inclinaison de la tête du porteur dans un plan vertical pendant que le porteur effectue la troisième tâche puis la quatrième tâche ; et

/f'/ à partir des seconds angles d'inclinaison de la tête du porteur qui sont mesurés à l'étape /e'/ et pour un second écart fixé de la puissance optique par rapport à la valeur de la puissance optique prescrite pour la vision de près, le second écart étant inférieur à la moitié de la valeur d'addition prescrite, déterminer une seconde direction intermédiaire de regard à travers le verre qui coupe la ligne méridienne entre la direction de référence pour la vision de loin et la direction de référence pour la vision de près, y compris cette dernière direction, cette seconde direction intermédiaire étant associée à la valeur de la puissance optique prescrite pour la vision de près diminuée du second écart de puissance optique.

Le verre est alors réalisé à l'étape /g/ de façon à obtenir en outre, pour la seconde direction intermédiaire qui est déterminée à l'étape /f'/, une quatrième valeur de puissance optique qui correspond à la valeur prescrite pour la vision de près diminuée du second écart de puissance optique.

L'ajustement de ce perfectionnement est donc réalisé en modifiant une direction de regard à travers le verre, pour laquelle la puissance optique est inférieure du second écart qui est fixé, à la valeur qui est prescrite pour la vision de près. Ce second écart de puissance optique, par rapport à la valeur de la puissance optique qui est prescrite pour la vision de près, est inférieur à la moitié de la valeur d'addition prescrite. De cette façon, l'ajustement complémentaire qui est apporté par le perfectionnement concerne une partie de la ligne méridienne du verre qui est proche du point de référence pour la vision de près. De préférence, le second écart de puissance optique est compris entre 0 et 0,5 dioptrie, ou compris entre 0% et 30% de la valeur prescrite d'addition, les valeurs limites nulles étant comprises.

De façon préférée, la seconde direction intermédiaire est déterminée à l'étape /f'/ de sorte que la distance angulaire entre cette seconde direction intermédiaire et la première direction intermédiaire est d'autant plus grande que le porteur baisse peu la tête lorsqu'il passe de la troisième tâche visuelle à la quatrième tâche visuelle, pour une première direction intermédiaire qui reste constante.

En particulier, le second écart de puissance optique peut être nul. Dans ce cas, la seconde direction intermédiaire qui est ajustée est confondue avec la direction de référence pour la vision de près. Le perfectionnement aboutit alors à un ajustement de la hauteur du point de référence pour la vision de près le long de la ligne méridienne du verre.

Selon un mode de mise en oeuvre avantageux du perfectionnement, une valeur d'un second gain peut être calculée à l'étape /f'/ pour le porteur, selon une troisième fonction d'une variation entre deux seconds angles d'inclinaison de la tête du porteur qui sont mesurés respectivement pendant qu'il effectue successivement les troisième et quatrième tâches. La seconde direction intermédiaire peut alors être déterminée de sorte qu'une distance angulaire entre la première direction intermédiaire et cette seconde direction intermédiaire varie selon une quatrième fonction de la valeur du second gain. La troisième ou la quatrième fonction est croissante, et l'autre est décroissante.

De préférence, le second gain est égal à une division de la variation entre deux seconds angles d'inclinaison qui sont mesurés respectivement pendant les troisième et quatrième tâches, par une variation correspondante entre des angles d'inclinaison du regard du porteur. La quatrième fonction est alors décroissante, par rapport au second gain.

L'invention propose aussi un système de mesure d'une variation d'inclinaison de la tête d'un sujet selon la revendication 22, qui comprend :

- un support vertical ;

- un dispositif d'affichage de premiers signaux visuels, qui est porté par le support de façon à ce qu'une hauteur de ce dispositif d'affichage puisse être ajustée au niveau des yeux du sujet lorsqu'il est debout devant le dispositif d'affichage, les premiers signaux visuels étant adaptés pour provoquer une première tâche visuelle pour le sujet ;

- un dispositif de projection de seconds signaux visuels, qui est adapté pour projeter les seconds signaux visuels sur le sol à une distance déterminée devant le support, en réponse à un déclenchement de projection, et les seconds signaux visuels étant adaptés pour provoquer une deuxième tâche visuelle pour le sujet ; et

- au moins un capteur, qui est adapté pour mesurer des angles d'inclinaison de la tête du sujet dans un plan vertical pendant un affichage des premiers signaux visuels puis pendant une projection des seconds signaux visuels.

Un tel système est adapté pour mettre en oeuvre un procédé de réalisation d'un verre ophtalmique progressif personnalisé tel que décrit précédemment.

Selon l'invention, le système comprend en outre un télémètre qui est adapté pour mesurer la distance entre le sujet et le dispositif d'affichage des premiers signaux visuels. Le système comprend aussi un dispositif de déclenchement qui est adapté pour déclencher un fonctionnement du dispositif de projection des seconds signaux visuels lorsque la distance entre le porteur et le dispositif d'affichage des premiers signaux visuels, qui est mesurée par le télémètre, devient inférieure à une distance-seuil fixée. Un tel fonctionnement automatisé permet des mesures plus rapides et plus précises.

De plus, le dispositif de projection des deuxièmes signaux visuels et éventuellement le télémètre peuvent être portés par le support, de façon à faciliter l'installation ou des déplacements du système complet.

D'autres particularités et avantages de la présente invention apparaîtront dans la description ci-après d'exemples de mise en oeuvre non limitatifs, en référence aux dessins annexés, dans lesquels :

- les figures 1a et 1b illustrent deux étapes d'un procédé conforme à une première mise en oeuvre de l'invention ;

- la figure 2 illustre une personnalisation d'un verre progressif, obtenue en utilisant l'invention ;

- les figures 3a et 3b illustrent deux étapes suplementaires d'un perfectionnement de l'invention, appliqué à la première mise en oeuvre des figures 1a et 1b ;

- la figure 4 illustre une personnalisation supplémentaire d'un verre progressif, obtenue en utilisant le perfectionnement des figures 3a et 3b ;

- les figures 5a et 5b correspondent respectivement aux figures 1a et 1b pour une seconde mise en oeuvre de l'invention ; et

- les figures 6a et 6b correspondent respectivement aux figures 3a et 3b pour la seconde mise en oeuvre de l'invention des figures 5a et 5b.

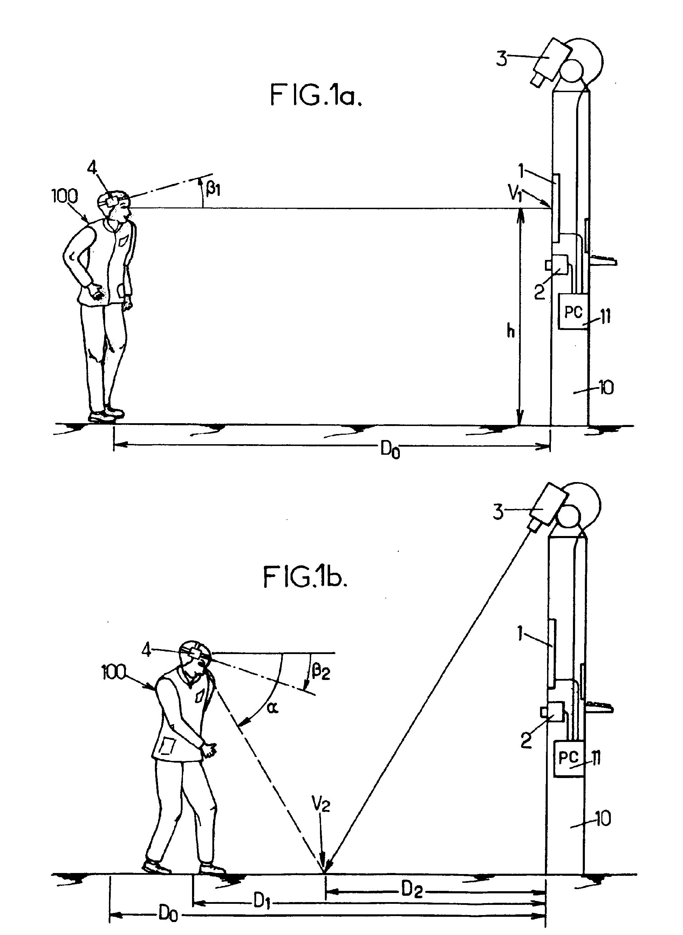

Conformément aux figures 1 a et 1 b, un dispositif d'affichage 1 est porté par un support vertical 10. Le dispositif 1 peut être, par exemple, un écran d'affichage à cristaux liquides qui est commandé par une unité informatique. Cette unité informatique est notée PC sur les figures et référencée 11. Elle peut être avantageusement incorporée dans le support 10, de façon à former un système de mesure complet qui soit compact, et qui puisse être utilisé facilement chez un opticien. L'unité informatique 11 est adaptée pour contrôler un affichage de premiers signaux visuels $V_1$ sur le dispositif 1. Les signaux $V_1$ sont choisis pour fixer l'attention d'un sujet. Ces signaux peuvent être, par exemple, un disque de plus de 5 cm de diamètre dont la couleur varie de façon aléatoire à une fréquence de 2 hertz, par exemple. La couleur du disque peut être facilement identifiée par le sujet même s'il présente une amétropie et n'est pas muni de lunettes correctrices. L'énumération des couleurs ou leur décompte constitue un exemple de première tâche visuelle provoquée par les signaux $V_1$.

Le support 10 est aussi équipé d'un télémètre 2 et d'un dispositif de projection 3, aussi reliés à l'unité informatique 11. Le télémètre 2 est orienté dans la même direction que le dispositif d'affichage 1, de façon à déterminer en temps réel la distance à laquelle se trouve un sujet devant le dispositif 1, lorsque ce sujet marche en direction du support 10.

Le dispositif 3 peut être un projecteur commercial d'images, qui est orienté pour projeter des seconds signaux visuels $V_2$ sur le sol devant le support 10. Il est aussi contrôlé par l'unité informatique 11. Notamment, l'unité 11 déclenche un fonctionnement du dispositif 3 lorsque le sujet se trouve à une distance du dispositif 1 qui est inférieure à une première distance de référence, notée $D_1$. Autrement dit, lorsque le sujet se trouve à une distance du dispositif d'affichage 1 qui est supérieure à $D_1$, le dispositif de projection 3 est éteint. Dès que le sujet se trouve à une distance du dispositif d'affichage 1 qui est inférieure à $D_1$, le dispositif de projection 3 projette les seconds signaux $V_2$ sur le sol, à une seconde distance $D_2$ devant le dispositif 1, mesurée horizontalement. Les signaux $V_2$ peuvent être une succession de chiffres ou de nombres qui varient aléatoirement, suffisamment gros pour pouvoir être lus sans difficulté, même sans lunettes de correction ophtalmique. La lecture de ces chiffres ou nombres est un exemple de seconde tâche visuelle provoquée par les signaux $V_2$.

Le sujet 100 qui est soumis à la mesure de ses mouvements de tête est équipé d'un capteur 4 qui est adapté pour mesurer à chaque instant l'angle d'inclinaison de sa tête dans un plan vertical. Pour cela, le capteur 4 est fixé sur un casque qui est ajusté de façon à être solidaire de la tête lorsqu'elle est bougée par le sujet. Plusieurs types de capteurs peuvent être utilisés, qui sont connus et disponibles commercialement. Ce peut être des capteurs d'inclinaison à base de liquide, des capteurs optiques, des capteurs inertiels, des capteurs à ultrasons, notamment.

Avant de commencer les mesures sur le sujet 100, le dispositif d'affichage 1 est ajusté en hauteur, de façon à se trouver sensiblement à la hauteur des yeux du sujet 100 lorsque celui-ci est debout devant le support 10. Ainsi, la direction du regard du sujet 100 est horizontale, lorsqu'il regarde les premiers signaux visuels $V_1$. L'ajustement de la hauteur du dispositif 1 peut être réalisé de nombreuses façons, manuellement ou automatiquement. Selon une façon particulièrement simple, le sujet se place devant le support 10 et regarde son reflet dans un miroir vertical qui est placé devant l'écran du dispositif 1. Le dispositif 1 est alors déplacé verticalement le long du support 10 jusqu'à ce que le sujet 100 voie le reflet de ses yeux qui est superposé à un repère de la position des signaux visuels $V_1$.

Le sujet 100 se place initialement devant le support 10, à une distance initiale $D_0$ de ce dernier. Une ligne droite peut être tracée sur le sol devant le support 10, de la longueur $D_0$, pour fixer la direction de déplacement du sujet pendant les mesures.

La distance initiale $D_0$ est de préférence supérieure à 4 m (mètre), par exemple égale à 5 m, pour que le sujet puisse marcher sans gêne en direction du support 10.

De préférence, la première distance $D_1$ et la seconde distance $D_2$ présentent entre elles une différence qui est comprise entre 1 et 3 m. Dans ces conditions, l'observation des seconds signaux visuels $V_2$ par le sujet 100 lorsqu'il se rapproche du dispositif 1 à une distance qui est inférieure à $D_1$ est représentative de situations usuelles. Par exemple, $D_1$ peut être égale 3,5 m et $D_2$ peut être égale à 1,5 m, de sorte que la différence $D_1-D_2$ est égale à 2 m.

L'unité 10 commande une présentation des premiers signaux $V_1$ et le sujet 100 effectue la première tâche visuelle (Figure 1 a). Simultanément, le sujet 100 marche régulièrement en direction du support 10 à partir de la distance initiale $D_0$. L'angle d'inclinaison de sa tête dans un plan vertical est alors mesuré. Lorsque le sujet 100 atteint la distance $D_1$ (Figure 1 b), l'unité 11 déclenche la projection des seconds signaux visuels $V_2$ et le sujet 100 continue à avancer, mais en effectuant maintenant la seconde tâche visuelle. Pour cela, il abaisse son regard en penchant spontanément sa tête en avant, dans une amplitude qui varie entre des sujets différents. Une nouvelle mesure de l'angle d'inclinaison de sa tête dans le plan vertical est alors réalisée.

Un premier gain $G_1$ peut alors être calculé selon l'équation (1) ci-dessous, pour caractériser l'amplitude relative de l'inclinaison de la tête du sujet 100 par rapport à l'abaissement de son regard, lorsqu'il passe de la première à la seconde tâche :

$$G_1 = \frac{\beta_2 - \beta_1}{\alpha} \qquad\qquad (1)$$

où $\beta_1$ et $\beta_2$ désignent respectivement les angles mesurés pour l'inclinaison de la tête lorsque le sujet effectue la première tâche visuelle, et lorsqu'il effectue la seconde tâche visuelle. Autrement dit, $\beta_1$ est la valeur mesurée avant que le sujet 100 arrive à la distance $D_1$ du dispositif 1, et $\beta_2$ est la valeur mesurée après qu'il se soit rapproché du dispositif 1 à une distance qui est inférieure à $D_1$. $\alpha$ désigne l'angle d'abaissement du regard du sujet 100 lorsqu'il passe de la première tâche visuelle à la seconde tâche visuelle. De façon commode, la direction horizontale, parallèle au sol, peut être prise comme origine des angles d'inclinaison de la tête. L'angle $\alpha$ d'abaissement du regard peut être calculé en utilisant l'équation (2) suivante :

$$tan\ \alpha = \frac{h}{D_1 - D_2} \qquad\qquad (2)$$

où h est la hauteur des yeux du sujet 100 par rapport au sol sur lequel sont projetés les signaux visuels $V_2$.

Le déplacement du sujet 100 à partir de la distance initiale $D_0$ vers le support 10 peut être répété, afin d'obtenir plusieurs valeurs du gain $G_1$ et de calculer une valeur moyenne de celles-ci.

Pour un sujet qui ne bougerait que ses yeux en passant de la première à la seconde tâche, la valeur du gain $G_1$ serait nulle puisque l'inclinaison de la tête resterait constante. A l'inverse, pour un sujet qui ne bougerait que sa tête dans les mêmes circonstances, la valeur 1 serait obtenue pour le gain $G_1$.

Lorsque le sujet 100 doit être équipé d'un nouveau verre ophtalmique progressif, une première direction intermédiaire de regard à travers le verre peut être déterminée à partir de la valeur du gain $G_1$ qui est obtenue pour ce sujet. Cette première direction intermédiaire est notée $R_1$ et caractérise, pour le verre final, la variation de la puissance optique lorsque le sujet 100, futur porteur du verre, abaissera son regard à partir de la direction de référence pour la vision de loin. Par exemple, la première direction intermédiaire $R_1$ peut être associée à un premier écart $e_1$ de 0,5 dioptrie, de la puissance optique par rapport à la valeur de puissance optique qui est prescrite pour ce porteur pour la vision de loin. La direction $R_1$, qui est ainsi définie par la valeur correspondante de la puissance optique, peut être déterminée en utilisant une loi de variation fixée, fonction de la valeur du gain $G_1$. Cette loi de variation est fixée de sorte que la direction $R_1$ varie en coupant la ligne méridienne du verre entre les deux directions de référence pour les visions de loin et de près, avec une distance angulaire par rapport à la direction de référence pour la vision de loin qui décroît avec la valeur

de $G_1$.

Par exemple, lorsque l'écart de puissance optique $e_1$ est égal à 0,5 dioptrie, la direction $R_1$ peut être située à une distance angulaire qui est située entre 15 et 25 (degrés) en dessous d'une direction de regard passant par une croix de montage du verre lorsque la valeur de $G_1$ est nulle. Pour la même valeur de 0,5 dioptrie de l'écart $e_1$, et lorsque $G_1$ est égal à l'unité, la distance angulaire entre la direction $R_1$ et la direction de regard qui passe par la croix de montage peut être inférieure à 1 °.

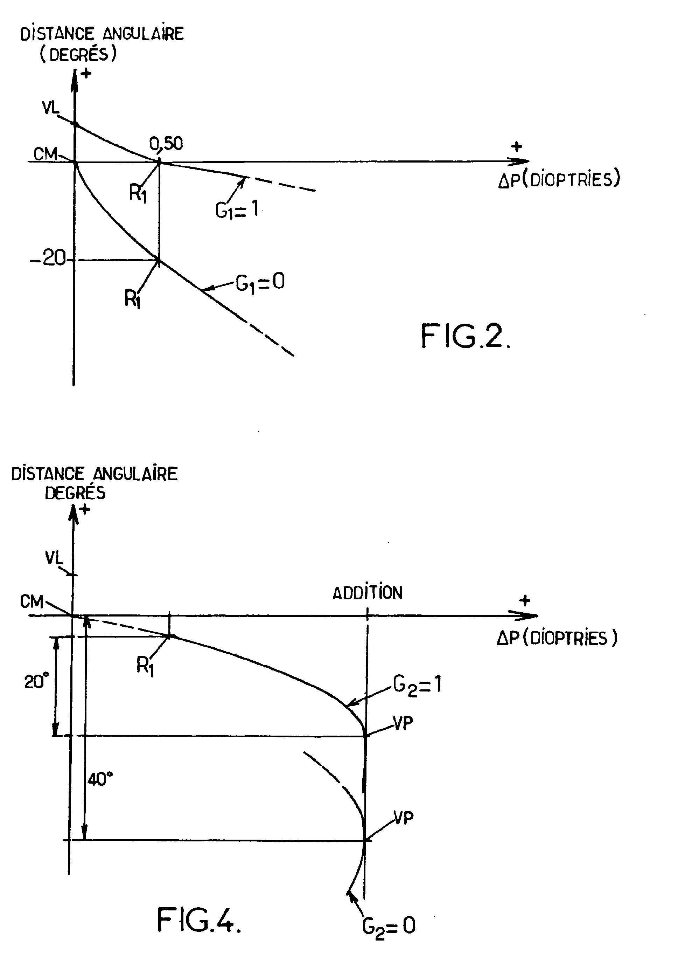

En particulier, la direction $R_1$ peut passer à 20° en dessous de la croix de montage du verre lorsque $G_1$ est nul, et par la croix de montage du verre lorsque $G_1$ est égal à l'unité. La Figure 2 illustre la personnalisation du verre progressif qui est ainsi obtenue.

La Figure 2 représente les variations de la puissance optique du verre progressif le long de la ligne méridienne. L'axe des abscisses repère en dioptries ces variations de puissance optique, en prenant pour origine la valeur pour la direction de référence pour la vision de loin. L'axe des ordonnées repère en degrés la distance angulaire entre chaque direction de regard à travers le verre et la direction qui passe par la croix de montage du verre, le long de la ligne méridienne. De façon connue, la croix de montage du verre, qui est utilisée pour assembler le verre dans une monture, correspond à la direction de regard horizontale. Usuellement, elle est située à 8 ° en dessous de la direction de référence pour la vision de loin. Chaque direction de regard à travers le verre passe par le centre de rotation de l'oeil lorsque la tête du porteur est immobile, et par un point correspondant du verre. CM, VL et VP désignent respectivement la direction de regard qui passe par la croix de montage, la direction de référence pour la vision de loin et la direction de référence pour la vision de près. La distance angulaire d'une direction de regard à travers le verre par rapport à la direction CM est orientée positivement vers le haut du verre. Pratiquement, une distance angulaire de 20° correspond à une distance linéaire d'environ 10 mm (millimètre) sur le verre le long de la ligne méridienne.

La loi de variation décroissante de la distance absolue entre les directions $R_1$ et CM, en fonction de la valeur de $G_1$, peut être quelconque. Par exemple, l'écart-angulaire entre ces directions peut suivre une loi linéaire du type : $(R_1-CM)$ en degrés $= - 20 \times (1-G_1)$. D'autres lois de variation peuvent être utilisées alternativement. La valeur de l'écart angulaire $(R_1-CM)$ qui est ainsi obtenue pour la valeur de $G_1$ déterminée pour le porteur constitue une personnalisation du verre progressif, en plus de la réalisation de la prescription optique.

Pour augmenter la fiabilité de cette personnalisation du verre progressif qui est apportée par l'invention, l'ensemble du procédé qui vient d'être décrit peut être exécuté plusieurs fois de façon indépendante les unes des autres. De préférence, il peut être exécuté cinq fois successivement. Les signaux visuels qui sont utilisés diffèrent avantageusement entre des itérations successives, afin que le sujet maintienne une attention qui est constante et des temps de réaction qui sont identiques. Le verre peut alors être réalisé en utilisant une valeur moyenne des directions $R_1$ qui sont obtenues respectivement lors des itérations, pour le même écart $e_1$.

La direction $R_1$ qui a été déterminée selon l'invention pour le futur porteur du verre progressif peut être prise en compte de plusieurs façons pour réaliser le verre.

Selon une première façon, au moins une surface du verre peut d'abord être calculée, de façon à obtenir des valeurs de puissance optique pour la direction VL, la direction $R_1$ et la direction VP, qui correspondent respectivement à la valeur prescrite pour la vision de loin, cette valeur prescrite pour la vision de loin ajoutée à l'écart $e_1$, et la valeur prescrite pour la vision de près. Un tel calcul est supposé connu en soi quant à sa méthode, qui n'est pas reprise ici. La surface du verre est ensuite usinée conformément aux résultats du calcul.

Selon une seconde façon, la réalisation du verre peut comprendre elle-même les sous-étapes suivantes :

- sélectionner un design du verre parmi un ensemble de designs de verres disponibles, en fonction des valeurs prescrites de puissance optique pour la vision de loin et d'addition, et de sorte qu'un verre correspondant au design sélectionné présente une longueur de progression qui est comprise entre 15° et 25°;

- réaliser le verre conformément au design sélectionné ;

- déterminer une hauteur du verre par rapport à l'oeil du porteur, de sorte que le point du verre qui correspond à la valeur de la puissance optique prescrite pour la vision de loin ajoutée à l'écart $e_1$ corresponde à la direction $R_1$ qui a été déterminée pour le porteur ; puis

- détourer le verre conformément à un logement d'une monture qui a été sélectionnée pour le porteur, en décalant verticalement la croix de montage du verre par rapport à un repère du logement de la monture, pour obtenir la hauteur du verre par rapport à l'oeil qui a été déterminée précédemment.

Un avantage de cette seconde façon réside dans le fait qu'un design de verre existant est repris sans calcul supplémentaire. Le verre est simplement assemblé avec la monture en le décalant verticalement, de façon à obtenir la valeur de puissance optique voulue pour la direction de regard $R_1$.

Dans le cadre de cette description, on entend par longueur de progression la distance angulaire qui sépare les deux directions de référence pour la vision de loin et pour la vision de près.

Enfin, une troisième façon de réaliser le verre utilise une base de données, qui regroupe des verres correspondant à des valeurs prescrites variables au moins pour la puissance optique en vision de loin et pour l'addition, et à des directions variables pour lesquelles la puissance optique correspond à la valeur prescrite pour la vision de loin ajoutée à l'écart $e_1$. Un verre est alors sélectionné dans cette base de données, qui correspond à la prescription du porteur et pour lequel la valeur prescrite pour la vision de loin ajoutée à l'écart $e_1$ correspond à la direction $R_1$ qui a été déterminée pour le porteur. Le verre qui est ainsi sélectionné est réalisé matériellement, d'une façon qui est connue en soi, à partir des données de la base pour ce verre.

Un perfectionnement de l'invention est maintenant décrit, qui procure une personnalisation supplémentaire du verre progressif, en fonction du porteur auquel il est destiné. Cette personnalisation supplémentaire concerne la variation de la puissance optique dans la partie inférieure de la longueur de progression, à proximité de la direction de référence pour la vision de près. Eventuellement, elle peut être appliquée pour déterminer cette direction de référence pour la vision de près elle-même.

Pour ce perfectionnement, une seconde série de mesures d'inclinaison de la tête du porteur est effectuée, en conditions de vision de près ou intermédiaire. Pour cette seconde série de mesure, le porteur peut être encore équipé du même casque à capteur d'inclinaison que précédemment.

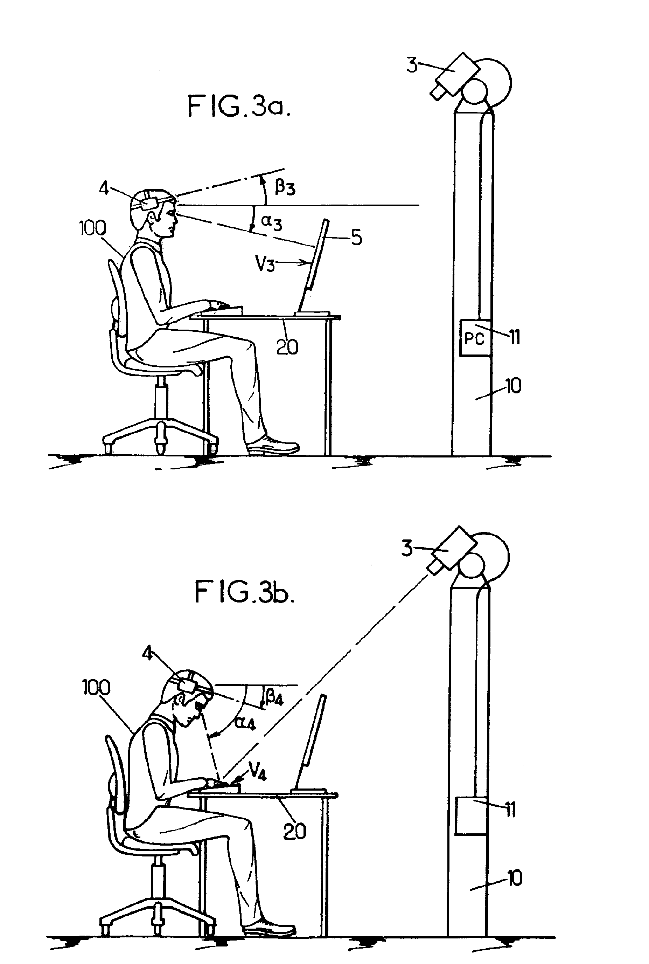

Comme représenté sur les Figures 3a et 3b, le sujet 100 se tient à un bureau 20, avec un écran d'affichage 5 qui est placé devant lui sur le bureau. L'écran 5 peut être positionné selon les recommandations usuelles en la matière, pour éviter que le sujet ne ressente une fatigue gênante lorsqu'il regarde l'écran pendant une longue durée. L'écran 5 peut aussi être commandé par l'unité informatique 11, de façon à présenter au sujet des troisièmes signaux visuels $V_3$ qui sont destinés à être regardés ou lus par le sujet. Ces troisièmes signaux $V_3$ sont par exemple des mots affichés sur l'écran 5, dont la lecture constitue une troisième tâche visuelle pour le sujet 100. Pendant qu'il effectue cette troisième tâche, l'angle d'inclinaison de sa tête est mesuré, et la valeur obtenue est notée $\beta_3$ (Figure 3a).

On présente ensuite au sujet 100, qui reste assis au bureau 20, des quatrièmes signaux visuels $V_4$ sur le bureau 20 lui-même, à l'endroit d'une feuille de papier écrite qui serait posée sur le bureau et que le sujet serait en train de lire. Ces quatrièmes signaux $V_4$ peuvent être des mots, et être projetés en utilisant encore le projecteur 3, par exemple. Alternativement, les quatrièmes signaux $V_4$ peuvent être présentés par un écran intégré dans le dessus du bureau 20 devant le sujet 100, à l'emplacement de la feuille de papier. La lecture des mots présentés sur le bureau 20 constitue une quatrième tâche visuelle pour le sujet 100. Pendant qu'il effectue cette quatrième tâche, l'angle d'inclinaison de sa tête est encore mesuré, et la valeur obtenue est notée $\beta_4$ (Figure 3b). De préférence, le sujet 100 ne se lève pas entre les troisième et quatrième tâches.

Une valeur d'un second gain $G_2$ est alors calculée, pour la vision de près, selon l'équation (3) suivante :

$$G_2 = \frac{\beta_4 - \beta_3}{\alpha_4 - \alpha_3} \qquad\qquad (3)$$

où $\alpha_3$ et $\alpha_4$ désignent les angles entre les directions du regard du sujet 100 pendant qu'il effectue la troisième puis la quatrième tâche, respectivement, et une direction de référence. La direction horizontale peut encore être prise comme référence des angles mesurés. Les valeurs de $\alpha_3$ et $\alpha_4$ peuvent être déterminées en caractérisant géométriquement les positions qui sont adoptées successivement par le sujet 100 pendant qu'il lit les signaux $V_3$ puis $V_4$.

Une valeur nulle qui est obtenue pour le gain $G_2$ signifie que le sujet a seulement baissé les yeux, sans baisser sa tête, lorsqu'il est passé de la troisième à la quatrième tâche visuelle. A l'inverse, un résultat qui est égal à l'unité pour le gain $G_2$ signifie que le sujet a seulement baissé sa tête, sans bouger ses yeux.

A partir de la valeur du gain $G_2$ qui est obtenue pour le futur porteur du verre progressif, une seconde direction intermédiaire de regard à travers le verre est déterminée et notée $R_2$. La direction $R_2$ coupe la ligne méridienne entre la direction de référence pour la vision de loin, VL, et la direction de référence pour la vision de près, VP. Elle est associée à la valeur de puissance optique qui est prescrite pour la vision de près, diminuée d'un écart fixé et noté $e_2$.

L'écart $e_2$ peut être non nul, par exemple égal à 0,25 dioptrie. Dans ce cas, la direction de référence pour la vision de près VP peut être fixe, et la détermination de la direction $R_2$ constitue un ajustement personnalisé de la variation de la puissance optique au dessus de la direction VP. Un tel ajustement peut être réalisé, à partir de la direction fixe VP, de la même façon que celui qui a été effectué en utilisant la première direction intermédiaire $R_1$ à partir de la direction VL. Notamment, la loi de variation de la distance angulaire absolue entre les directions CM et $R_2$ est de préférence décroissante en fonction du gain $G_2$.

On suppose maintenant que l'écart $e_2$ est fixé à la valeur nulle. Dans ce cas, la puissance optique qui est associée à la direction $R_2$ devient identique à la valeur de la puissance optique qui est prescrite pour la direction VP, signifiant que les deux directions VP et $R_2$ sont confondues. La direction de référence pour la vision de près VP devient alors variable, et sa détermination constitue la personnalisation supplémentaire qui est apportée par le perfectionnement de l'invention.

L'ajustement de la direction VP est alors effectué de sorte que la distance angulaire entre la direction de regard qui passe par la croix de montage, CM, et la direction VP soit une fonction décroissante de la valeur du gain $G_2$. En outre, la direction VP est avantageusement située à une distance angulaire qui est comprise entre 35° et 45° de la direction CM lorsque la valeur du gain $G_2$ est nulle. Lorsque la valeur du gain $G_2$ est égale à l'unité, la direction VP peut être située à une distance angulaire de la direction $R_1$ qui est comprise entre 15° et 25°, vers le bas du verre progressif.

La Figure 4 a été établie en utilisant les mêmes conventions que la Figure 2. Elle montre deux positions extrêmes de la direction VP, qui concernent des porteurs pour lesquels les valeurs 0 et 1 du gain $G_2$ ont été obtenues. Sur cette figure, l'écart angulaire CM-$R_2$ est égal à 40° pour $G_2$=0, et l'écart angulaire $R_1$-$R_2$ est égal à 20° pour $G_2$=1.

Toutefois, la variation de la direction $R_2$, éventuellement confondue avec la direction VP, en fonction du gain $G_2$ peut être limitée pour maintenir une longueur de progression qui soit suffisante pour produire un bon confort d'utilisation du verre par le porteur. En particulier, la distance angulaire entre les directions $R_1$ et VP peut être avantageusement maintenue supérieure ou égale à 20°.

En outre, la distance angulaire entre les directions CM et VP peut être limitée par la hauteur du logement de la monture, dans lequel le verre est destiné à être assemblé. Dans ces circonstances, la distance angulaire entre les directions CM et VP peut être maintenue inférieure à une valeur maximale pour des faibles valeurs de $G_2$, proches de zéro. Typiquement, la distance angulaire entre les deux directions CM et VP peut être maintenue pour cette raison entre 35° et 45° lorsque la valeur de $G_2$ est nulle.

De même que pour la direction $R_1$, la direction $R_2$ peut être déterminée indépendamment à plusieurs reprises, en répétant les étapes qui sont illustrées par les figures 3a et 3b et le calcul du gain $G_2$. Le verre est alors réalisé en utilisant une valeur moyenne des directions $R_2$ qui sont ainsi obtenues pour les itérations successives.

Dans le cas ou le perfectionnement qui vient d'être décrit est utilisé, le verre est réalisé de l'une des façons qui a déjà été décrite, en faisant de sorte que, en outre, la valeur de la puissance optique pour la direction $R_2$ corresponde à la valeur qui est prescrite pour la vision de près diminuée de l'écart $e_2$. Lorsque l'écart $e_2$ est nul, le verre est réalisé de sorte que la direction VP présente la distance angulaire qui a été déterminée par rapport à la direction CM ou à la direction $R_1$.

Selon un autre perfectionnement de l'invention indépendant du précédent, et qui peut éventuellement être combiné à celui-ci, une autre personnalisation du verre peut encore consister à adapter en fonction du porteur, des zones latérales du verre qui s'étendent de chaque côté de la ligne méridienne du verre. Ces zones latérales contiennent une répartition d'astigmatisme involontaire, de sorte que les zones de vision de loin, de près et intermédiaire soient presque dépourvues d'un tel astigmatisme involontaire. Le verre peut alors être réalisé de façon à obtenir en outre ces zones latérales avec des extensions pour celles-ci qui ont déterminées pour le porteur.

La mise en oeuvre de l'invention qui est décrite maintenant est compatible avec un équipement du sujet 100 et un système de mesure qui sont simplifiés.

Selon cette nouvelle mise en oeuvre, le porteur est équipé sur sa tête d'une source lumineuse qui est adaptée pour produire un faisceau lumineux vers l'avant de la tête avant du sujet. Le faisceau lumineux est entraîné en inclinaison par des mouvements de la tête du sujet dans le plan vertical. Dans ce cas, les angles d'inclinaison de la tête du sujet, pendant qu'il réalise l'une quelconque des tâches visuelles qui ont été énumérées, peuvent être mesurés à partir de positions d'une tache qui est formée par le faisceau lumineux sur un écran situé devant le sujet. Par exemple, le capteur 4 peut être remplacé par une source laser 7 sur le casque dont le sujet 100 est équipé. Afin de mesurer plus facilement les angles d'inclinaison de la tête, une graduation convenable 8 peut être prévue devant le sujet 100.

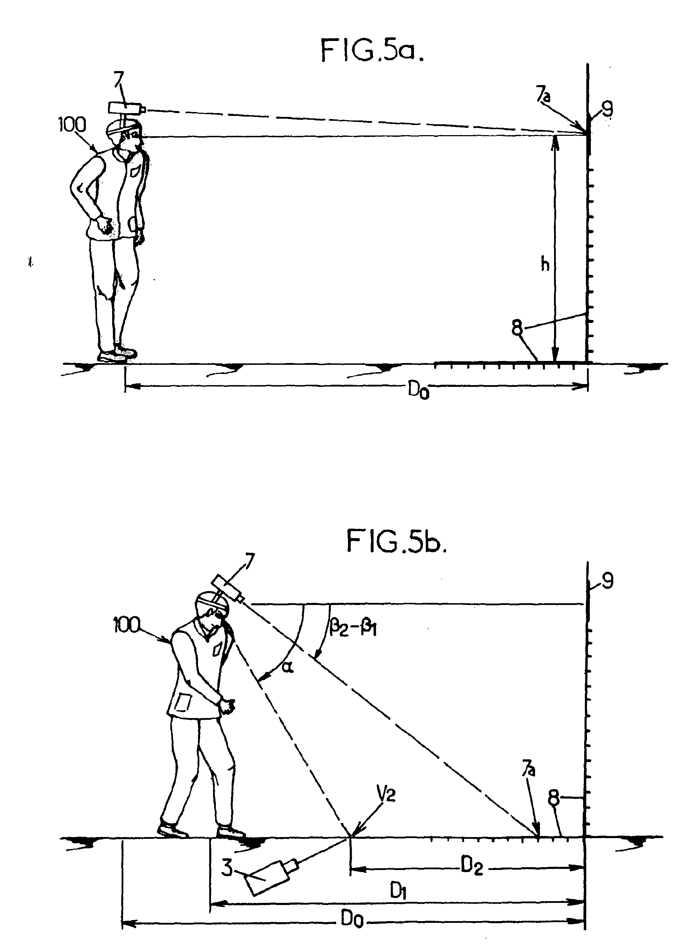

Les Figures 5a et 5b montrent une telle mise en oeuvre pour les étapes des Figures 1 a et 1 b. La graduation 8 est verticale et s'étend en dessous d'une cible 9 qui correspond à son origine, et dont elle est solidaire. La graduation 8 ainsi que la cible 9 peuvent être simplement suspendues à un mur. Eventuellement, la graduation 8 peut se prolonger sur le sol. La cible 9 est ajustée initialement à la hauteur des yeux du sujet. En outre, une inclinaison initiale de la source laser 7 sur le casque 4 peut être ajustée, pour compenser un écart de hauteur entre la source 7 et les yeux du sujet 100.

Le dispositif d'affichage 1 peut être supprimé, de même que l'unité informatique 11. La première tâche visuelle consiste alors, pour le sujet 100 pendant qu'il marche en direction de la cible 9 à partir de la distance initiale $D_0$, à contrôler l'inclinaison de sa tête de façon à maintenir la tâche lumineuse 7a sur la cible 9 (Figure 5a). Lorsqu'il arrive à la distance horizontale $D_1$ de la cible 9, un opérateur déclenche la présentation des seconds signaux visuels $V_2$ par le dispositif de projection 3. Eventuellement, le dispositif de projection 3 peut être mobile, et tenu par l'opérateur qui le dirige vers le sol de façon que les signaux visuels $V_2$ soient projetés à la distance $D_2$ devant la cible 9. Lorsqu'il effectue la seconde tâche visuelle, le sujet 100 baisse éventuellement la tête, de sorte que la tache lumineuse 7a qui est produite par la source 7 se déplace vers le bas, le long de la graduation 8 (Figure 5b). La lecture de la position de la tache lumineuse 7a sur la graduation 8, pendant la seconde tâche visuelle, donne directement la valeur de la différence $\beta_2$-

$\beta_1$, à introduire dans l'équation (1). Les autres éléments de mise en oeuvre de l'invention ne sont pas modifiés par rapport à la description qui en a été donnée en référence aux figures 1a, 1b et 2.

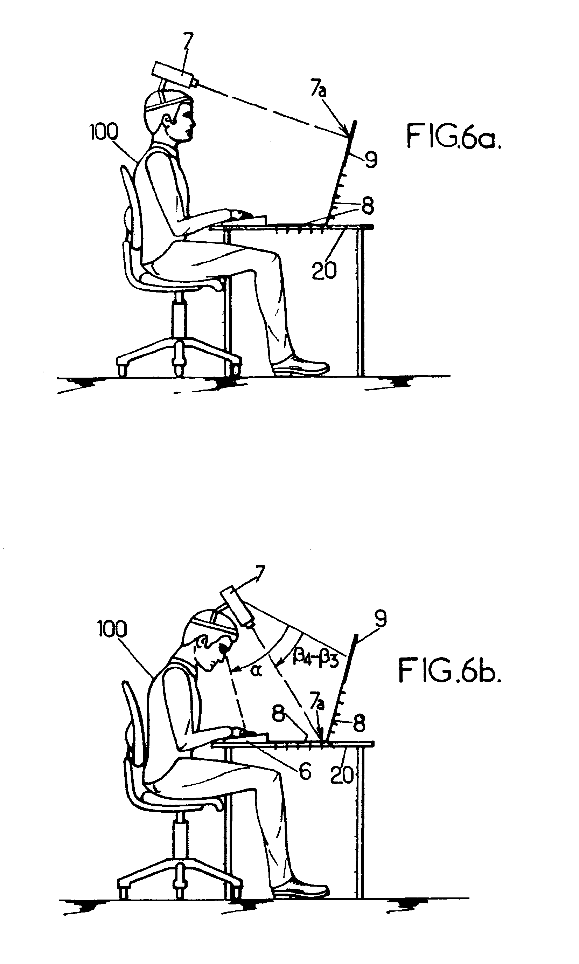

Les figures 6a et 6b illustrent la mise en oeuvre du perfectionnement concernant la vision de près, avec la source lumineuse 7 qui remplace le capteur 4. Sur ces figures, des références identiques à celles d'éléments qui ont déjà été introduits désignent les mêmes éléments. L'écran d'affichage 5 est remplacé par la cible 9, dans une position identique au dessus du bureau 20. La graduation 8 s'étend entre la cible 9 et une feuille écrite 6 qui est posée sur le bureau 20, juste devant le sujet 100 pour qu'il puisse la lire. La troisième tâche visuelle consiste pour le sujet 100 à placer la tache lumineuse 7a au centre de la cible 9, et la quatrième tâche visuelle consiste à lire la feuille 6. La lecture de la position de la tache lumineuse 7a sur la graduation 8, pendant la quatrième tâche visuelle, donne la valeur de la différence $\beta_4$-$\beta_3$ à introduire dans l'équation (3). Les autres éléments de mise en oeuvre du perfectionnement de l'invention ne sont pas modifiés par rapport à la description qui en a été donnée en référence aux figures 3a, 3b et 4.

Il est entendu que les mises en oeuvre de l'invention qui ont été décrites en détail ci-dessus peuvent être adaptées, tout en conservant certains avantages de l'invention. En particulier, les formules de calcul qui ont été données pour les gains $G_1$ et $G_2$ peuvent être modifiées.

En outre, les mises en oeuvre matérielles qui correspondent aux Figures 1 a et 1 b peuvent être mélangées avec celles des Figures 5a et 5b. Par exemple, les premiers signaux visuels $V_1$ qui sont produits par le dispositif d'affichage 1 peuvent être utilisés alors que le sujet 100 est muni d'un casque à source lumineuse. La lecture des signaux $V_1$ constitue alors encore la première tâche visuelle et le faisceau de lumière ne sert plus qu'à déterminer la variation d'inclinaison de la tête du sujet.

De la même façon, les troisièmes signaux visuels $V_3$ qui sont produits par l'écran 5 peuvent aussi être utilisés lorsque le sujet 100 est muni du casque à source lumineuse.

Enfin, la graduation 8 et/ou la cible 9 peuvent être remplacées, dans la mise en oeuvre des Figures 5a, 5b et 6a, 6b par tout écran permettant de détecter les déplacements de la tache lumineuse 7a. Par exemple, un tel écran peut être, alternativement, un détecteur linéaire d'intensité lumineuse qui est adapté pour produire directement une indication du déplacement de la tache 7a entre deux déclenchements successifs de détection.

## Revendications

1.  Procédé de réalisation d'un verre ophtalmique progressif personnalisé, destiné à un porteur identifié (100), le verre ayant des valeurs de puissance optique variables le long d'une ligne méridienne déterminée sur ledit verre, entre une direction de référence pour une vision de loin et une direction de référence pour une vision de près, ledit procédé comprenant les étapes suivantes :

    /a/ pour le porteur, obtenir une valeur de puissance optique prescrite pour la vision de loin et une valeur d'addition prescrite, une somme de la valeur de puissance optique prescrite pour la vision de loin avec la valeur d'addition prescrite fournissant une valeur prescrite de puissance optique pour la vision de près ; et
    /g/ réaliser le verre de façon à obtenir pour les directions suivantes à travers le verre :

    - pour la direction de référence pour la vision de loin : une première valeur de la puissance optique correspondant à la valeur prescrite pour la vision de loin, et
    - pour la direction de référence pour la vision de près : une deuxième valeur de la puissance optique correspondant à la valeur prescrite pour la vision de près,

    ledit procédé étant **caractérisé en ce qu'**il comprend en outre les étapes suivantes, effectuées entre les étapes /a/ et /g/ :

    /b/ présenter des premiers signaux visuels ($V_1$) à hauteur d'yeux du porteur en position debout, les premiers signaux visuels étant adaptés pour provoquer une première tâche visuelle ;
    /c/ pour le porteur, marcher en direction des premiers signaux visuels à partir d'une distance initiale ($D_0$) mesurée horizontalement par rapport aux dits premiers signaux visuels, en effectuant la première tâche visuelle ;
    /d/ lorsque le porteur arrive à une première distance ($D_1$) des premiers signaux visuels, inférieure à la distance initiale, présenter des seconds signaux visuels ($V_2$) sur le sol entre le porteur et lesdits premiers signaux visuels, à une seconde distance ($D_2$) mesurée horizontalement à partir des premiers signaux visuels et inférieure à ladite première distance, les seconds signaux visuels étant adaptés pour provoquer une deuxième tâche visuelle, le porteur passant alors de la première tâche à la deuxième tâche ;
    /e/ mesurer des premiers angles d'inclinaison de la tête du porteur dans un plan vertical pendant que ledit porteur effectue la première tâche puis la deuxième tâche ; et

/f/ à partir des premiers angles d'inclinaison de la tête du porteur mesurés selon l'étape /e/ et pour un premier écart fixé de la puissance optique par rapport à la valeur de la puissance optique prescrite pour la vision de loin, ledit premier écart étant inférieur à la moitié de la valeur d'addition prescrite, déterminer une première direction intermédiaire de regard à travers le verre coupant la ligne méridienne entre la direction de référence pour la vision de loin et la direction de référence pour la vision de près, ladite première direction intermédiaire étant associée à la valeur de la puissance optique prescrite pour la vision de loin ajoutée audit premier écart de puissance optique ;

et **en ce que** le verre est réalisé à l'étape /g/ de façon à obtenir en outre, pour la première direction intermédiaire déterminée à l'étape /f/, une troisième valeur de puissance optique correspondant à ladite valeur prescrite pour la vision de loin ajoutée au premier écart de puissance optique.

2. Procédé selon la revendication 1, suivant lequel la première direction intermédiaire est déterminée à l'étape /f/ de sorte qu'une distance angulaire entre ladite première direction intermédiaire et la direction de référence pour la vision de loin est d'autant plus grande que le porteur (100) baisse peu la tête lorsque ledit porteur passe de la première tâche visuelle à la seconde tâche visuelle.

3. Procédé selon la revendication 1 ou 2, suivant lequel le premier écart de puissance optique est compris entre 0,25 et 0,75 dioptrie, ou compris entre 10% et 40% de la valeur d'addition prescrite.

4. Procédé selon l'une quelconque des revendications précédentes, suivant lequel une différence entre les première ($D_1$) et deuxième ($D_2$) distances est comprise entre 1 et 3 mètres.

5. Procédé selon l'une quelconque des revendications précédentes, suivant lequel, à l'étape /f/, une valeur d'un premier gain est calculée pour le porteur (100), selon une première fonction d'une variation entre deux premiers angles d'inclinaison de la tête du porteur mesurés respectivement pendant que ledit porteur effectue successivement les première et deuxième tâches,
et suivant lequel la première direction intermédiaire est déterminée de sorte qu'une distance angulaire entre la direction de référence pour la vision de loin et ladite première direction intermédiaire varie selon une seconde fonction de la valeur dudit premier gain,
l'une des dites première et seconde fonctions étant croissante, et l'autre des dites première et seconde fonctions étant décroissante.

6. Procédé selon la revendication 5, suivant lequel le premier écart de puissance optique par rapport à la valeur de la puissance optique prescrite pour la vision de loin est égal à 0,5 dioptrie, et suivant lequel la première direction intermédiaire est située à une distance angulaire comprise entre 15° et 25° en dessous d'une direction de regard passant par une croix de montage du verre lorsque la valeur du premier gain est nulle, et à une distance angulaire inférieure à 1 ° de ladite direction de regard passant par la croix de montage lorsque la valeur du premier gain est égale à l'unité.

7. Procédé selon l'une quelconque des revendications précédentes, suivant lequel les étapes /b/ à /f/ sont exécutées plusieurs fois de façon à déterminer indépendamment plusieurs premières directions intermédiaires, et suivant lequel l'étape /g/ est exécutée en utilisant une valeur moyenne des premières directions intermédiaires obtenues respectivement pour les itérations successives des étapes /b/ à /f/.

8. Procédé selon l'une quelconque des revendications 1 à 7, suivant lequel l'étape /g/ comprend elle-même les sous-étapes suivantes :

- calculer au moins une surface du verre, de façon à obtenir des valeurs de puissance optique pour la direction de référence pour la vision de loin, la première direction intermédiaire et la direction de référence pour la vision de près, qui correspondent respectivement à la valeur prescrite pour la vision de loin, ladite valeur prescrite pour la vision de loin ajoutée au premier écart de puissance optique, et la valeur prescrite pour la vision de près ; puis
- usiner ladite surface du verre conformément à des résultats du calcul.

9. Procédé selon l'une quelconque des revendications 1 à 7, suivant lequel l'étape /g/ comprend elle-même les sous-étapes suivantes :

/g1/ sélectionner un design du verre parmi un ensemble de designs de verres disponibles, en fonction des valeurs prescrites de puissance optique pour la vision de loin et d'addition, et de sorte qu'un verre correspondant au design sélectionné présente une longueur de progression comprise entre 15° et 25° ;

/g2/ réaliser le verre conformément au design sélectionné ;

/g3/ déterminer une hauteur du verre par rapport à l'oeil du porteur, de sorte qu'un point du verre correspondant à la valeur de la puissance optique prescrite pour la vision de loin ajoutée au premier écart de puissance optique corresponde à la première direction intermédiaire déterminée pour le porteur à l'étape /f/ ; puis

/g4/ détourer le verre conformément à un logement d'une monture sélectionnée pour le porteur, en décalant verticalement une croix de montage du verre par rapport à un repère du logement de la monture, de façon à obtenir la hauteur du verre par rapport à l'oeil déterminée à la sous-étape /g3/.

**10.** Procédé selon l'une quelconque des revendications 1 à 7, suivant lequel l'étape /g/ comprend elle-même les sous-étapes suivantes :

- obtenir une base de données de verres correspondant à des valeurs prescrites variables au moins pour la puissance optique en vision de loin et pour l'addition, et à des directions variables pour lesquelles la puissance optique correspond à la valeur prescrite pour la vision de loin ajoutée au premier écart de puissance optique ;

- dans ladite base de données, sélectionner un verre correspondant à la valeur de puissance optique prescrite pour la vision de loin et à la valeur d'addition prescrite, et pour lequel la valeur de la puissance optique prescrite pour la vision de loin ajoutée au premier écart correspond à la première direction intermédiaire déterminée pour le porteur à l'étape /f/ ; et

- réaliser le verre sélectionné conformément aux données de la base pour ledit verre.

**11.** Procédé selon l'une quelconque des revendications 1 à 10, suivant lequel le porteur (100) est équipé sur sa tête, pendant les étapes /b/ à /e/, d'au moins un capteur (4) adapté pour mesurer l'angle d'inclinaison de la tête dans le plan vertical pendant que ledit porteur effectue la première tâche visuelle puis la seconde tâche visuelle.

**12.** Procédé selon l'une quelconque des revendications 1 à 10, suivant lequel le porteur (100) est équipé sur sa tête, pendant les étapes /b/ à /e/, d'une source lumineuse (7) adaptée pour produire un faisceau lumineux en avant dudit porteur, de sorte que ledit faisceau lumineux est entraîné en inclinaison par des mouvements de la tête du porteur dans le plan vertical, et suivant lequel une variation entre deux premiers angles d'inclinaison de la tête du porteur pendant que ledit porteur réalise la première tâche puis la deuxième tâche, respectivement, est mesurée à partir de positions d'une tache formée par le faisceau lumineux sur un écran situé devant le porteur.

**13.** Procédé selon l'une quelconque des revendications précédentes, comprenant en outre les étapes suivantes, exécutées entre les l'étapes /a/ et /g/ :

/b'/ lorsque le porteur (100) est assis à un bureau (20), présenter des troisièmes signaux visuels ($V_3$) au dessus du bureau, à un premier emplacement correspondant à une position d'écran d'affichage de données informatiques, les troisièmes signaux visuels étant adaptés pour provoquer une troisième tâche visuelle ;

/c'/ pour le porteur, se tenir assis audit bureau et effectuer la troisième tâche visuelle ;

/d'/ présenter des quatrièmes signaux visuels ($V_4$) sur le bureau devant le porteur, à un second emplacement correspondant à une feuille de papier posée sur le bureau et lue par le porteur, les quatrièmes signaux visuels étant adaptés pour provoquer une quatrième tâche visuelle ;

/e'/ mesurer des seconds angles d'inclinaison de la tête du porteur dans un plan vertical pendant que ledit porteur effectue la troisième tâche puis la quatrième tâche ; et

/f'/ à partir des seconds angles d'inclinaison de la tête du porteur mesurés à l'étape /e'/ et pour un second écart fixé de la puissance optique par rapport à la valeur de la puissance optique prescrite pour la vision de près, ledit second écart étant inférieur à la moitié de la valeur d'addition prescrite, déterminer une seconde direction intermédiaire de regard à travers le verre coupant la ligne méridienne entre la direction de référence pour la vision de loin et la direction de référence pour la vision de près, y compris ladite direction de référence pour la vision de près, ladite seconde direction intermédiaire étant associée à la valeur de la puissance optique prescrite pour la vision de près diminuée dudit second écart de puissance optique ;

et suivant lequel le verre est réalisé à l'étape /g/ de façon à obtenir en outre, pour la seconde direction intermédiaire déterminée à l'étape /f'/, une quatrième valeur de puissance optique correspondant à ladite valeur prescrite pour la vision de près diminuée du second écart de puissance optique.

**14.** Procédé selon la revendication 13, suivant lequel la seconde direction intermédiaire est déterminée à l'étape /f'/ de sorte qu'une distance angulaire entre ladite seconde direction intermédiaire et la première direction intermédiaire déterminée à l'étape /f/ est d'autant plus grande que le porteur (100) baisse peu la tête lorsque ledit porteur passe de la troisième tâche visuelle à la quatrième tâche visuelle, la première direction intermédiaire restant constante.

**15.** Procédé selon la revendication 13 ou 14, suivant lequel le second écart de puissance optique est compris entre 0 et 0,5 dioptrie, ou compris entre 0% et 30% de la valeur prescrite d'addition, y compris lesdites valeurs limites nulles.

**16.** Procédé selon l'une quelconque des revendications 13 à 15, suivant lequel, à l'étape /f'/, une valeur d'un second gain est calculée pour le porteur (100), selon une troisième fonction d'une variation entre deux seconds angles d'inclinaison de la tête du porteur mesurés respectivement pendant que ledit porteur effectue successivement les troisième et quatrième tâches,
et suivant lequel la seconde direction intermédiaire est déterminée de sorte qu'une distance angulaire entre la première direction intermédiaire et ladite seconde direction intermédiaire varie selon une quatrième fonction de la valeur dudit second gain,
l'une des dites troisième et quatrième fonctions étant croissante, et l'autre des dites troisième et quatrième fonctions étant décroissante.

**17.** Procédé selon la revendication 16, suivant lequel le second écart de puissance optique par rapport à la valeur de la puissance optique prescrite pour la vision de près est nul, de sorte que la seconde direction intermédiaire est confondue avec la direction de vision de près, et est située à une distance, angulaire comprise entre 35° et 45° d'une direction de regard qui passe par une croix de montage du verre lorsque la valeur du second gain est nulle, et à une distance angulaire comprise entre 15° et 25° de la première direction intermédiaire déterminée à l'étape /f/ lorsque la seconde valeur du gain est égale à l'unité, vers le bas du verre progressif.

**18.** Procédé selon l'une quelconque des revendications 13 à 17, suivant lequel les étapes /b'/ à /f'/ sont exécutées plusieurs fois de façon à déterminer indépendamment plusieurs secondes directions intermédiaires, et suivant lequel l'étape /g/ est exécutée en utilisant une valeur moyenne des secondes directions intermédiaires obtenues respectivement pour les itérations successives des étapes /b'/ à /f'/.

**19.** Procédé selon l'une quelconque des revendications 13 à 18, suivant lequel suivant lequel le porteur (100) est équipé sur sa tête, pendant les étapes /b'/ à /e'/, d'au moins un capteur (4) adapté pour mesurer l'inclinaison de la tête dans le plan vertical pendant que ledit porteur effectue la troisième tâche visuelle puis la quatrième tâche visuelle.

**20.** Procédé selon l'une quelconque des revendications 13 à 18, suivant lequel le porteur (100) est équipé sur sa tête, pendant les étapes /b'/ à /e'/, d'une source lumineuse (7) adaptée pour produire un faisceau lumineux en avant dudit porteur, de sorte que ledit faisceau lumineux est entraîné en inclinaison par des mouvements de la tête du porteur dans le plan vertical, et suivant lequel une variation entre deux seconds angles d'inclinaison de la tête du porteur pendant que ledit porteur réalise la troisième tâche puis la quatrième tâche, respectivement, est mesurée à partir de positions d'une tache formée par le faisceau lumineux sur un écran situé devant le porteur.

**21.** Procédé selon l'une quelconque des revendications précédentes, suivant lequel le verre est en outre réalisé à l'étape /g/ de sorte que des zones latérales dudit verre contenant une répartition d'astigmatisme involontaire aient des extensions déterminées pour le porteur (100), de chaque côté de la ligne méridienne du verre.

**22.** Système de mesure d'une variation d'inclinaison de la tête d'un sujet (100), comprenant :

- un support vertical (10) ;
- un dispositif d'affichage de premiers signaux visuels (1), porté par le support de façon à ce qu'une hauteur dudit dispositif d'affichage puisse être ajustée au niveau des yeux du sujet lorsque ledit sujet est debout devant le dispositif d'affichage, les premiers signaux visuels étant adaptés pour provoquer une première tâche visuelle pour le sujet ;
- un dispositif de projection de seconds signaux visuels (3), adapté pour projeter les seconds signaux visuels sur le sol à une distance ($D_2$) déterminée devant le support, en réponse à un déclenchement de projection, et les seconds signaux visuels étant adaptés pour provoquer une deuxième tâche visuelle pour le sujet ; et
- au moins un capteur (4), adapté pour mesurer des angles d'inclinaison de la tête du sujet dans un plan vertical pendant un affichage des premiers signaux visuels puis pendant une projection des seconds signaux visuels,

ledit système comprenant en outre un télémètre (2) adapté pour mesurer une distance entre le sujet (100) et le dispositif d'affichage des premiers signaux visuels (1), le système comprenant aussi un dispositif de déclenchement adapté pour déclencher un fonctionnement du dispositif de projection des seconds signaux visuels (3) lorsque la distance entre le sujet et le dispositif d'affichage des premiers signaux visuels, mesurée par le télémètre, devient inférieure à une distance-seuil ($D_1$) fixée.

23. Système selon la revendication 22, dans lequel le dispositif de projection des deuxièmes signaux visuels (3) est porté par le support (10).

24. Système selon la revendication 22, dans lequel le télémètre (2) est porté par le support (10).

**Claims**

1. A method for producing a customized progressive power ophthalmic lens intended for an identified wearer (100), the lens having variable optical power values along a determined meridian line on said lens, between a reference direction for far vision and a reference direction for near vision, said method comprising the following steps:

/a/ for the wearer, obtaining a prescribed optical power value for far vision and a prescribed addition value, a sum of the prescribed optical power value for far vision with the prescribed addition value providing a prescribed optical power value for near vision; and
/g/ producing the lens so as to obtain, for the following directions through the lens:

- for the reference direction for far vision: a first optical power value corresponding to the prescribed value for far vision, and
- for the reference direction for near vision: a second optical power value corresponding to the prescribed value for near vision,

said method being **characterized in that** it also comprises the following steps, performed between the steps /a/ and /g/:
/b/ presenting first visual signals ($V_1$) at the wearer's eye height when standing, the first visual signals being adapted to prompt a first visual task;
/c/ for the wearer, walking toward the first visual signals from an initial distance ($D_0$) measured horizontally relative to said first visual signals, while performing the first visual task;
/d/ when the wearer arrives at a first distance ($D_1$) from the first visual signals, less than the initial distance, presenting second visual signals ($V_2$) on the ground between the wearer and said first visual signals, at a second distance ($D_2$) measured horizontally from the first visual signals and less than said first distance, the second visual signals being adapted to prompt a second visual task, the wearer then switching from the first task to the second task;
/e/ measuring first angles of inclination of the head of the wearer in a vertical plane while said wearer performs the first task then the second task; and
/f/ from the first angles of inclination of the head of the wearer measured according to the step /e/ and for a first fixed deviation of the optical power relative to the prescribed optical power value for far vision, said first deviation being less than half the prescribed addition value, determining a first intermediate direction of sight through the lens intersecting the meridian line between the reference direction for far vision and the reference direction for near vision, said first intermediate direction being associated with the prescribed optical power value for far vision added to said first optical power deviation;

and **in that** the lens is produced in step /g/ so as to also obtain, for the first intermediate direction determined in the step /f/, a third optical power value corresponding to said prescribed value for far vision added to the first optical power deviation.

2. The method as claimed in claim 1, wherein the first intermediate direction is determined in the step /f/ so that an angular distance between said first intermediate direction and the reference direction for far vision is all the greater when the wearer (100) does not lower the head much when said wearer switches from the first visual task to the second visual task.

3. The method as claimed in claim 1 or 2, wherein the first optical power deviation is between 0.25 and 0.75 dioptry, or between 10% and 40% of the prescribed addition value.

4. The method as claimed in any one of the preceding claims, wherein a difference between the first ($D_1$) and second ($D_2$) distances is between 1 and 3 meters.

5. The method as claimed in any one of the preceding claims, wherein, in step /f/, a first gain value is calculated for the wearer (100), according to a first function of a variation between two first angles of inclination of the head of the wearer which are measured respectively while said wearer performs the first and second tasks in succession, and wherein the first intermediate direction is determined so that an angular distance between the reference direction for far vision and said first intermediate direction varies according to a second function of said first gain value, one of said first and second functions being increasing, and the other of said first and second functions being decreasing.

6. The method as claimed in claim 5, wherein the first optical power deviation relative to the prescribed optical power value for far vision is equal to 0.5 dioptry, and wherein the first intermediate direction is situated at an angular distance of between 15° and 25° below a direction of gaze passing through a lens mounting cross when the first gain value is zero, and at an angular distance less than 1° from said direction of sight, passing through the mounting cross when the first gain value is equal to unity.

7. The method as claimed in any one of the preceding claims, wherein the steps /b/ to /f/ are executed several times so as to independently determine several first intermediate directions, and wherein the step /g/is executed using an average value of the first intermediate directions obtained for the respective successive iterations of the steps /b/ to /f/.

8. The method as claimed in any one of claims 1 to 7, wherein the step /g/ itself comprises the following substeps:

   - calculating at least one surface of the lens, so as to obtain optical power values for the reference direction for far vision, the first intermediate direction and the reference direction for near vision, which correspond respectively to the prescribed value for far vision, said prescribed value for far vision added to the first optical power deviation, and the prescribed value for near vision; then
   - machining said surface of the lens in accordance with results of the calculation.

9. The method as claimed in any one of claims 1 to 7, wherein the step /g/ itself comprises the following substeps:

   /g1/ selecting a lens design from a set of available lens designs, according to the prescribed optical power values for far vision and addition, and such that a lens corresponding to the selected design has a progression length of between 15° and 25°;
   /g2/ producing the lens in accordance with the selected design;
   /g3/ determining a height of the lens relative to the eye of the wearer, such that a point of the lens corresponding to the prescribed optical power value for far vision added to the first optical power deviation corresponds to the first intermediate direction determined for the wearer in the step /f/; then
   /g4/ trimming the lens in accordance with a receptacle of a frame selected for the wearer, a mounting cross of the lens being vertically offset relative to a reference point of the receptacle of the frame, so as to obtain the height of the lens relative to the eye determined in the substep /g3/.

10. The method as claimed in any one of claims 1 to 7, wherein the step /g/ itself comprises the following substeps:

   - obtaining a lens database corresponding to variable prescribed values at least for the optical power in far vision conditions and for the addition, and to variable directions for which the optical power corresponds to the prescribed value for far vision added to the first optical power deviation;
   - from said data base, selecting a lens corresponding to the prescribed optical power value for far vision and to the prescribed addition value, and for which the prescribed optical power value for far vision added to the first deviation corresponds to the first intermediate direction determined for the wearer in the step /f/; and
   - producing the selected lens in accordance with the data in the database for said lens.

11. The method as claimed in any one of claims 1 to 10, wherein the wearer (100) is fitted, on his head, during the steps /b/ to /e/, with at least one sensor (4) suitable for measuring the angle of inclination of the head in the vertical plane while said wearer performs the first visual task then the second visual task.

**12.** The method as claimed in any one of claims 1 to 10, wherein the wearer (100) is equipped, on his head, during the steps /b/ to /e/, with a light source (7) which is suitable for producing a light beam in front of said wearer, so that said light beam is inclined by movements of the head of the wearer in the vertical plane, and wherein a variation between two first angles of inclination of the head of the wearer while said wearer performs the first task then the second task, respectively, is measured from positions of a spot formed by the light beam on a screen situated in front of the wearer.

**13.** The method as claimed in any one of the preceding claims, also comprising the following steps, executed between the steps /a/ and /g/:

/b'/ when the wearer (100) is seated at a desk (20), presenting third visual signals ($V_3$) above the desk, at a first placement corresponding to a position of a computer data display screen, the third visual signals being adapted to prompt a third visual task;

/c'/ for the wearer, staying seated at said desk and performing the third visual task;

/d'/ presenting fourth visual signals ($V_4$) on the desk in front of the wearer, at a second placement corresponding to a sheet of paper placed on the desk and read by the wearer, the fourth visual signals being adapted to prompt a fourth visual task;

/e'/ measuring second angles of inclination of the head of the wearer in a vertical plane while said wearer performs the third task then the fourth task; and

/f'/ from the second angles of inclination of the head of the wearer measured in the step /e'/ and for a second fixed deviation of the optical power relative to the prescribed optical power value for near vision, said second deviation being less than half the prescribed addition value, determining a second intermediate direction of sight through the lens intersecting the meridian line between the reference direction for far vision and the reference direction for near vision, including said reference direction for near vision, said second intermediate direction being associated with the prescribed optical power value for near vision minus said second optical power deviation;

and wherein a lens is produced in the step /g/ so as to also obtain, for the second intermediate direction determined in the step /f'/, a fourth optical power value corresponding to said prescribed value for near vision minus the second optical power deviation.

**14.** The method as claimed in claim 13, wherein the second intermediate direction is determined in the step /f'/ such that an angular distance between said second intermediate direction and the first intermediate direction determined in the step /f/ is all the greater when the wearer (100) does not lower the head much when said wearer switches from the third visual task to the fourth visual task, the first intermediate direction remaining constant.

**15.** The method as claimed in claim 13 or 14, wherein the second optical power deviation is between 0 and 0.5 dioptry, or between 0% and 30% of the prescribed addition value, including said zero limit values.

**16.** The method as claimed in any one of claims 13 to 15, wherein, in the step /f'/, a second gain value is calculated for the wearer (100), according to a third function of a variation between two second angles of inclination of the head of the wearer measured respectively while said wearer performs the third and fourth tasks in succession, and wherein the second intermediate direction is determined such that an angular distance between the first intermediate direction and said second intermediate direction varies according to a fourth function of said second gain value, one of said third and fourth functions increasing, and the other of said third and fourth functions being decreasing.

**17.** The method as claimed in claim 16, wherein the second optical power deviation relative to the prescribed optical power value for near vision is zero, such that the second intermediate direction is merged with near vision direction, and is situated at an angular distance of between 35° and 45° from a direction of sight which passes through a lens mounting cross when the second gain value is zero, and at an angular distance of between 15° and 25° from the first intermediate direction determined in the step /f/ when the second gain value is equal to unity, toward the bottom of the progressive lens.

**18.** The method as claimed in any one of claims 13 to 17, wherein the steps /b'/ to /f'/ are executed several times so as to independently determine several second intermediate directions, and wherein the step /g/ I is executed by using an average value of the second intermediate directions obtained respectively for the successive iterations of the steps /b'/ to /f'/.

**19.** The method as claimed in any one of claims 13 to 18, wherein the wearer (100) is equipped, , on his head, during the steps /b'/ to /e'/, with at least one sensor (4) suitable for measuring the inclination of the head in the vertical plane while said wearer performs the third visual task then the fourth visual task.

**20.** The method as claimed in any one of claims 13 to 18, wherein the wearer (100) is equipped, on his head, during the steps /b'/ to /e' /, with a light source (7) suitable for producing a light beam in front of said wearer, such that said light beam is inclined by movements of the head of the wearer in the vertical plane, and where a variation between two second angles of inclination of the head of the wearer while said wearer performs the third task then the fourth task, respectively, is measured from positions of a spot formed by the light beam on a screen situated in front of the wearer.

**21.** The method as claimed in any one of the preceding claims, wherein the lens is also produced in the step /g/ such that lateral regions of said lens containing an unwanted astigmatism distribution have extensions determined for the wearer (100), on either side of the meridian line of the lens.

**22.** A system for measuring a variation of inclination of the head of a subject (100), comprising:

- a vertical support (10);
- a display device for first visual signals (1), mounted on the support so that a height of said display device can be adjusted to the level of the eyes of the subject when said subject is standing in front of the display device, the first visual signals being adapted to prompt a first visual task for the subject;
- a projection device for second visual signals (3), suitable for projecting the second visual signals onto the ground at a determined distance ($D_2$) in front of the support, in response to an initiation of projection, and the second visual signals being suitable for promoting a second visual task for the subject; and
- at least one sensor (4), suitable for measuring angles of inclination of the head of the subject in a vertical plane during a display of the first visual signals then during a projection of the second visual signals,

the system also comprising a range finder (2) suitable for measuring a distance between the subject (100) and the display device for the first visual signals (1), the system also comprising an initiating device suitable for initiating operation of the projection device for the second visual signals (3) when the distance between the subject and the display device for the first visual signals, measured by the range finder, becomes less than a fixed threshold distance ($D_1$).

**23.** The system as claimed in claim 22, wherein the projection device for the second visual signals (3) is mounted on the support (10).

**24.** The system as claimed in claim 22, wherein the range finder (2) is mounted on the support (10).

**Patentansprüche**

**1.** Verfahren zur Herstellung von einem personalisierten ophtalmischen Gleitsichtglas, das für einen identifizierten Träger (100) bestimmt ist, wobei das Glas entlang einer auf dem Glas bestimmten Meridianlinie variable Brechkraftwerte aufweist, zwischen einer Referenzrichtung für eine Fernsicht und einer Referenzrichtung für eine Nahsicht, wobei das Verfahren die folgenden Schritte umfasst:

a) Erhalten von einem Brechkraft-Wert, der für die Fernsicht vorgeschrieben ist, und von einem vorgeschriebenen Zusatzwert für den Träger, wobei eine Summe des für die Fernsicht vorgeschriebenen Werts mit dem vorgeschriebenen Zusatzwert, einen für die Nahsicht vorgeschriebenen Brechkraft-Wert liefert, und

g) Herstellen des Glases auf solch eine Weise, um für die folgenden Richtungen durch das Glas zu erhalten:

- für die Referenzrichtung für die Fernsicht: einen ersten Brechkraft-Wert, der dem für die Fernsicht vorgeschriebenen Wert entspricht, und
- für die Referenzrichtung für die Nahsicht: einen zweiten Brechkraftwert, der dem für die Nahsicht vorgeschriebenen Wert entspricht,

wobei das Verfahren **dadurch gekennzeichnet ist, dass** es weiterhin die folgenden Schritte umfasst, die zwischen den Schritten a) und g) durchgeführt werden:

b) Präsentieren von ersten visuellen Signalen ($V_1$) auf Augenhöhe des Trägers in aufrechter Position, wobei die ersten visuellen Signale dazu angepasst sind, eine erste visuelle Aufgabe hervorzurufen,

c) Gehen des Trägers in Richtung der ersten visuellen Signale, ausgehend von einer Anfangsdistanz ($D_0$), die horizontal in Bezug auf die ersten visuellen Signale gemessen wird, wobei die erste visuelle Aufgabe durchgeführt wird,

d) wenn der Träger an einer ersten Distanz ($D_1$) von den ersten visuellen Signalen ankommt, die kleiner ist als die Anfangsdistanz, Präsentieren von zweiten visuellen Signalen ($V_2$) auf dem Boden zwischen dem Träger und den ersten visuellen Signalen, in einer zweiten Distanz (D2), die horizontal gemessen wird, ausgehend von den ersten visuellen Signalen, und die kleiner ist als die erste Distanz, wobei die zweiten visuellen Signale angepasst sind, um eine zweite visuelle Aufgabe hervorzurufen, wobei der Träger also von der ersten Aufgabe zu der zweiten Aufgabe übergeht,

e) Messen von ersten Neigungswinkeln des Kopfes des Trägers in einer vertikalen Ebene, während der Träger die erste Aufgabe und dann die zweite Aufgabe durchführt, und

f) ausgehend von den im Schritt e) gemessenen ersten Neigungswinkeln des Kopfes des Trägers, und für einen ersten festen Brechkraft-Abstand in Bezug auf den Wert der Brechkraft, der für die Fernsicht vorgeschrieben ist, wobei der erste Abstand kleiner ist als die Hälfte von dem vorgeschriebenen Zusatzwert, Bestimmen einer ersten Blick-Zwischenrichtung durch das Glas, welche die Meridian-Linie schneidet, zwischen der Referenzrichtung für die Fernsicht und der Referenzrichtung für die Nahsicht, wobei die erste Zwischenrichtung dem Wert der Brechkraft, der für die Fernsicht vorgeschrieben ist, hinzugefügt zu dem ersten Brechkraft-Abstand, zugeordnet ist,

und dadurch, dass das Glas im Schritt g) so hergestellt wird, dass weiterhin für die erste Zwischenrichtung, die im Schritt f) bestimmt wird, ein dritter Brechkraft-Wert erhalten wird, der dem Wert, der für die Fernsicht vorgeschrieben ist, hinzugefügt zu dem ersten Brechkraft-Abstand, entspricht.

2. Verfahren nach Anspruch 1, wobei die erste Zwischenrichtung im Schritt f) derart bestimmt wird, dass eine Winkel-Distanz zwischen der ersten Zwischenrichtung und der Referenzrichtung für die Fernsicht umso größer ist, je weniger der Träger (100) den Kopf neigt, wenn der Träger von der ersten visuellen Aufgabe zu der zweiten visuellen Aufgabe übergeht.

3. Verfahren nach Anspruch 1 oder 2, wobei der erste Brechkraft-Abstand zwischen 0,25 und 0,75 Dioptrien liegt, oder zwischen 10 % und 40 % von dem vorgeschriebenen Zusatzwert.

4. Verfahren nach einem der vorhergehenden Ansprüche, wobei eine Differenz zwischen dem ersten ($D_1$) und dem zweiten ($D_2$) Abstand zwischen 1 und 3 m liegt.

5. Verfahren nach einem der vorhergehenden Ansprüche, wobei im Schritt f) ein Wert von einem ersten Verstärkungsfaktor für den Träger (100) berechnet wird, gemäß einer ersten Funktion einer Variation zwischen zwei ersten Neigungswinkeln des Kopfes des Trägers, die jeweils gemessen werden, während der Träger nacheinander die erste und die zweite Aufgabe durchführt,

und wobei die erste Zwischenrichtung so bestimmt wird, dass eine Winkeldistanz zwischen der Referenzrichtung für die Fernsicht und der ersten Zwischenrichtung gemäß einer zweiten Funktion des Werts des ersten Verstärkungsfaktors variiert,

wobei die eine von der ersten und der zweiten Funktion zunimmt und die andere von der ersten und der zweiten Funktion abnimmt.

6. Verfahren nach Anspruch 5, wobei der erste Brechkraft-Abstand in Bezug auf den Wert der vorgeschriebenen Brechkraft für die Fernsicht gleich 0,5 Dioptrien ist, und wobei die erste Zwischenrichtung sich in einer Winkeldistanz zwischen 15° und 25° unterhalb von einer Blickrichtung befindet, die durch ein Montage-Kreuz des Glases verläuft, wenn der Wert von dem ersten Verstärkungsfaktor Null ist, und in einer Winkeldistanz kleiner als 1° von der Blickrichtung, die durch das Montagekreuz verläuft, wenn der Wert von dem ersten Verstärkungsfaktor gleich Eins ist.

7. Verfahren nach einem der vorhergehenden Ansprüche, wobei die Schritte b) bis f) mehrere Male so durchgeführt werden, dass unabhängig voneinander verschiedene erste Zwischenrichtungen bestimmt werden, und wobei der Schritt g) unter Verwendung von einem Mittelwert der ersten Zwischenrichtungen durchgeführt wird, die jeweils für die aufeinanderfolgenden Wiederholungen der Schritte b) bis f) erhalten werden.

8. Verfahren nach einem der Ansprüche 1 bis 7, wobei der Schritt g) selbst die folgenden Unterschritte umfasst:

- Berechnen von wenigstens einer Oberfläche des Glases, so dass Brechkraft-Werte für die Referenzrichtung für die Fernsicht, die erste Zwischenrichtung und die Referenzrichtung für die Nahsicht erhalten werden, die jeweils dem für die Fernsicht vorgeschriebenen Wert, dem für die Fernsicht vorgeschriebenen Wert, hinzugefügt zu dem ersten Brechkraft-Abstand, und dem für die Nahsicht vorgeschriebenen Wert entsprechen, dann
- Bearbeiten der Oberfläche des Glases konform zu den Resultaten der Berechnung.

9. Verfahren nach einem der Ansprüche 1 bis 7, wobei der Schritt g) selbst die folgenden Unterschritte umfasst:

g1) Auswählen einer Gestaltung des Glases aus einer Menge von verfügbaren Glas-Gestaltungen, in Abhängigkeit von dem vorgeschriebenen Brechkraftwert für die Fernsicht und dem vorgeschriebenen Zusatzwert, und so, dass ein Glas, das der ausgewählten Gestaltung entspricht, eine Progressionslänge zwischen 15° und 25° umfasst.
g2) Herstellen des Glases konform zu der ausgewählten Gestaltung,
g3) Bestimmen einer Höhe des Glases in Bezug auf das Auge des Trägers, so dass ein Punkt des Glases, der dem Wert der vorgeschriebenen Brechkraft für die Fernsicht, hinzugefügt zu dem ersten Brechkraft-Abstand entspricht, der ersten Zwischenrichtung entspricht, die für den Träger im Schritt f) bestimmt wurde, dann
g4) Beschneiden/Beschleifen des Glases in Übereinstimmung mit einer Aufnahme von einem Gestell, das für den Träger ausgewählt wurde, wobei ein Montagekreuz des Glases in Bezug auf eine Markierung der Aufnahme des Gestells vertikal verschoben wird, so dass die Höhe des Glases in Bezug auf das Auge erhalten wird, die unter Schritt g3) bestimmt wurde.

10. Verfahren nach einem der Ansprüche 1 bis 7, wobei der Schritt g) selbst die folgenden Unterschritte umfasst:

- Erhalten einer Datenbank von Gläsern entsprechend variablen vorgeschriebenen Werten wenigstens für die Brechkraft bei Fernsicht und für den Zusatzwert, und variablen Richtungen, für welche die Brechkraft dem für die Fernsicht vorgeschriebenen Wert, hinzugefügt zu dem ersten Brechkraft-Abstand entspricht,
- Auswählen von einem Glas in der Datenbank, welches dem Wert der Brechkraft entspricht, der für die Fernsicht vorgeschrieben ist, und dem vorgeschriebenen Zusatzwert, und für welches der Wert der vorgeschriebenen Brechkraft für die Fernsicht, hinzugefügt zu dem ersten Abstand, der ersten Zwischenrichtung entspricht, die für den Träger im Schritt f) bestimmt wurde, und
- Herstellen des ausgewählten Glases konform mit den Daten der Datenbank für das Glas.

11. Verfahren nach einem der Ansprüche 1 bis 10, wobei der Träger (100) während den Schritten b) bis e) auf seinem Kopf mit wenigstens einen Sensor (4) ausgestattet ist, der dazu angepasst ist, den Neigungswinkel des Kopfes in der vertikalen Ebene zu messen, während der Träger die erste visuelle Aufgabe und dann die zweite visuelle Aufgabe durchführt.

12. Verfahren nach einem der Ansprüche 1 bis 10, wobei der Träger (100) auf seinem Kopf während der Schritte b) bis e) mit einer Lichtquelle (7) ausgestattet ist, die dazu angepasst ist, einen Lichtstrahl vor dem Träger zu produzieren, so dass der Lichtstrahl in der Neigung durch die Bewegungen des Kopfes des Trägers in der vertikalen Ebene mitgenommen wird, und wobei eine Variation zwischen zwei ersten Neigungswinkeln des Kopfes des Trägers, während der Träger die erste Aufgabe und dann die zweite Aufgabe durchführt, jeweils ausgehend von Positionen eines Flecks gemessen wird, der durch den Lichtstrahl auf einem vor dem Träger positionierten Schirm gebildet wird.

13. Verfahren nach einem der vorhergehenden Ansprüche, weiterhin umfassend die folgenden Schritte, die zwischen den Schritten a) und g) durchgeführt werden:

b') wenn der Träger (100) an einem Schreibtisch (20) sitzt, Präsentieren von dritten visuellen Signalen ($V_3$) oberhalb von dem Schreibtisch, an einer ersten Stelle, die einer Bildschirmposition zur Anzeige von Computerdaten entspricht, wobei die dritten visuellen Signale dazu angepasst sind, eine dritte Aufgabe hervorzurufen,
c') Sitzenbleiben am Schreibtisch und Ausführen der dritten visuellen Aufgabe für/durch den Träger,
d') Präsentieren von vierten visuellen Signalen ($V_4$) auf dem Schreibtisch vor dem Träger, an einer zweiten Stelle, die einem Blatt Papier entspricht, das auf dem Schreibtisch liegt und von dem Träger gelesen wird, wobei die vierten visuellen Signale dazu angepasst sind, eine vierte visuelle Aufgabe hervorzurufen,
e') Messen von zweiten Neigungswinkeln des Kopfes des Trägers in einer vertikalen Ebene, während der Träger die dritte Aufgabe und dann die vierte Aufgabe durchführt, und
f) ausgehend von den zweiten Neigungswinkeln des Kopfes des Trägers, die im Schritt e') gemessen werden, und für einen zweiten festen Brechkraft-Abstand in Bezug auf den Wert der Brechkraft, der für die Nahsicht vorgeschrieben ist, wobei der zweite Abstand kleiner ist als die Hälfte von dem vorgeschriebenen Zusatzwert, Bestimmen von einer zweiten Blick-Zwischenrichtung durch das Glas, welche die Meridian-Linie schneidet, zwischen der Referenzrichtung für die Fernsicht und der Referenzrichtung für die Nahsicht, einschließlich der Referenzrichtung für die Nahsicht, wobei die zweite Zwischenrichtung einem Wert der Brechkraft, der für die Nahsicht vorgeschrieben ist, vermindert um den zweiten Brechkraft-Abstand, zugeordnet ist,

und wobei das Glas im Schritt g) so hergestellt wird, dass weiter für die zweite Zwischenrichtung, die im Schritt f) bestimmt wird, ein vierter Brechkraft-Wert erhalten wird, der dem für die Nahsicht vorgeschrieben Wert, vermindert um den zweiten Brechkraft-Abstand, entspricht.

14. Verfahren nach Anspruch 13, wobei die zweite Zwischenrichtung im Schritt f) so bestimmt wird, dass eine Winkeldistanz zwischen der zweiten Zwischenrichtung und der ersten Zwischenrichtung, die im Schritt f) bestimmt wird, umso größer ist, je weniger der Träger (100) den Kopf neigt, wenn der Träger von der dritten visuellen Aufgabe zu der vierten visuellen Aufgabe übergeht, wobei die erste Zwischenrichtung konstant bleibt.

15. Verfahren nach Anspruch 13 oder 14, wobei der zweite Brechkraft-Abstand zwischen 0 und 0,5 Dioptrien liegt, oder zwischen 0 % und 30 % des vorgeschriebenen Zusatzwerts, einschließlich der Grenzwerte Null.

16. Verfahren nach einem der Ansprüche 13 bis 15, wobei, im Schritt f), ein Wert eines zweiten Verstärkungsfaktors für den Träger (100) berechnet wird, gemäß einer dritten Funktion einer Variation zwischen zwei zweiten Neigungswinkeln des Kopfes des Trägers, die jeweils gemessen werden, während der Träger nacheinander die dritte und die vierte Aufgabe ausführt,
und wobei die zweite Zwischenrichtung so bestimmt wird, dass eine Winkeldistanz zwischen der ersten Zwischenrichtung und der zweiten Zwischenrichtung gemäß einer vierten Funktion des Wertes von dem zweiten Verstärkungsfaktor variiert,
wobei die eine von der dritten und vierten Funktion zunimmt und die andere von der dritten und vierten Funktion abnimmt.

17. Verfahren nach Anspruch 16, wobei der zweite Brechkraft-Abstand in Bezug auf den vorgeschriebenen Brechkraftwert für die Nahsicht Null ist, so dass die zweite Zwischenrichtung mit der Richtung der Nahsicht zusammenfällt und sich in einer Winkeldistanz zwischen 35° und 45° von einer Blickrichtung befindet, die durch ein Montagekreuz des Glases verläuft, wenn der Wert von dem zweiten Verstärkungsfaktor Null ist, und in einer Winkeldistanz zwischen 15° und 25° von der ersten Zwischenrichtung, die im Schritt f) bestimmt wird, wenn der zweite Verstärkungswert gleich Eins ist, nach unten von dem Gleitsicht-Glas.

18. Verfahren nach einem der Ansprüche 13 bis 17, wobei die Schritte b') bis f) mehrere Male durchgeführt werden, um unabhängig voneinander mehrere zweite Zwischenrichtungen zu bestimmen, und wobei der Schritt g) unter Verwendung von einem Mittelwert der zweiten Zwischenrichtungen durchgeführt wird, die jeweils für die aufeinander folgenden Wiederholungen der Schritte b') bis f) erhalten werden.

19. Verfahren nach einem der Ansprüche 13 bis 18, wobei der Träger (100) auf seinem Kopf während der Schritte b') bis e') mit wenigstens einem Sensor (4) ausgestattet ist, der dazu angepasst ist, die Neigung des Kopfs in der vertikalen Ebene zu messen, während der Träger die dritte visuelle Aufgabe und dann die vierte visuelle Aufgabe durchführt.

20. Verfahren nach einem der Ansprüche 13 bis 18, wobei der Träger (100) auf seinem Kopf während der Schritte b') bis e') mit einer Lichtquelle (7) ausgestattet ist, die dazu angepasst ist, einen Lichtstrahl vor dem Träger zu erzeugen, so dass der Lichtstrahl in der Neigung durch die Bewegungen des Kopfes des Trägers in der vertikalen Ebene mitgenommen wird, und wobei eine Variation zwischen zwei zweiten Neigungswinkeln des Kopfes des Trägers, während der Träger die dritte Aufgabe und dann die vierte Aufgabe durchgeführt, jeweils ausgehend von Positionen eines Flecks gemessen wird, der durch den Lichtstrahl auf einem vor dem Träger positionierten Schirm gebildet wird.

21. Verfahren nach einem der vorhergehenden Ansprüche, wobei das Glas weiterhin im Schritt g) so hergestellt wird, dass seitliche Bereiche von dem Glas, die eine unfreiwillige Verteilung des Astigmatismus enthalten, für den Träger (100) bestimmte Ausdehnungen haben, auf jeder Seite der Meridianlinie des Glases.

22. Messsystem für eine Variation einer Neigung des Kopfs von einer Testperson (100), umfassend:

- eine vertikale Halterung (10),
- eine Anzeigeeinrichtung für erste visuelle Signale (1), die von der Halterung so gehalten wird, dass eine Höhe von der Anzeigeeinrichtung auf die Augenhöhe der Testperson eingestellt werden kann, wenn die Testperson aufrecht vor der Anzeigeeinrichtung steht, wobei die ersten visuellen Signale angepasst sind, um eine erste visuelle Aufgabe für die Testperson hervorzurufen,
- eine Projektionseinrichtung für zweite visuelle Signale (3), die dazu ausgelegt ist, um die zweiten visuellen Signale auf den Boden zu projizieren, in einer bestimmten Distanz ($D_2$) vor der Halterung, in Reaktion auf eine Auslösung der Projektion, und wobei die zweiten visuellen Signale angepasst sind, um eine zweite visuelle Aufgabe für die Testperson hervorzurufen, und
- wenigstens einen Sensor (4), der dazu angepasst ist, um Neigungswinkel des Kopfes der Testperson in einer vertikalen Ebene während einer Anzeige der ersten visuellen Signale und dann während einer Projektion der zweiten visuellen Signale zu messen,

wobei das System weiterhin einen Entfernungsmesser (2) umfasst, der dazu ausgebildet ist, eine Distanz zwischen der Testperson (100) und der Anzeigeeinrichtung für die ersten visuellen Signale (1) zu messen, wobei das System weiter eine Auslöse-Einrichtung umfasst, die dazu ausgebildet ist, um einen Betrieb der Projektionseinrichtung für die zweiten visuellen Signale (3) auszulösen, wenn die Distanz zwischen der Testperson und der Anzeigeeinrichtung für die ersten visuellen Signale, gemessen durch den Entfernungsmesser, kleiner wird als ein fester Distanz-Schwellenwert ($D_1$).

23. System nach Anspruch 22, wobei die Projektionseinrichtung für die zweiten visuellen Signale (3) durch die Halterung (10) gehalten wird.

24. System nach Anspruch 22, wobei der Entfernungsmesser (2) durch die Halterung (10) gehalten wird.

# FIG.1a.

# FIG.1b.

DISTANCE ANGULAIRE
(DEGRÉS)

VL

CM

0,50

$R_1$

$G_1 = 1$

+
ΔP(DIOPTRIES)

−20

$R_1$

$G_1 = 0$

FIG.2.

DISTANCE ANGULAIRE
DEGRÉS

VL

CM

ADDITION

+
ΔP(DIOPTRIES)

$R_1$

20°

$G_2 = 1$

VP

40°

VP

FIG.4.

$G_2 = 0$

FIG.3a.

FIG.3b.

# FIG.5a.

# FIG.5b.

FIG.6a.

FIG.6b.

## RÉFÉRENCES CITÉES DANS LA DESCRIPTION

**Documents brevets cités dans la description**

- EP 1591064 A
- WO 2007088313 A